# EUROPÄISCHE PATENTSCHRIFT

(11) **EP 3 490 741 B1**
(45) Veröffentlichungstag und Bekanntmachung des Hinweises auf die Patenterteilung: **09.09.2020**
(21) Anmeldenummer: 17764313.7
(22) Anmeldetag: 26.07.2017
(51) Int. Cl.: B21D 55/00, B21D 43/26, B21D 5/02, F16P 3/14

(54) **WERKSTÜCKBEARBEITUNGSMASCHINE UND VERFAHREN ZUM BETREIBEN DER WERKSTÜCKBEARBEITUNGSMASCHINE**
WORKPIECE PROCESSING MACHINE AND METHOD FOR OPERATING THE WORKPIECE PROCESSING MACHINE
MACHINE D'USINAGE DE PIÈCES ET SON PROCÉDÉ DE FONCTIONNEMENT

(30) Priorität: 26.07.2016 AT 506772016
(43) Veröffentlichungstag der Anmeldung: 05.06.2019
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); HAUSMANN, Florian, 4050 Traun (AT); HÖRL, Matthias, 4020 Linz (AT); KOVJENIC, Nenad, 4040 Linz (AT); MAIER, Florian, 4060 Leonding (AT); STEININGER, Verena, 4020 Linz (AT); THEIS, Helmut, 4540 Pfarrkirchen (AT); WALDHERR, Manfred, 4040 Linz (AT)
(74) Vertreter: Burger, Hannes
(86) Internationale Anmeldenummer: PCT/AT2017/060188
(87) Internationale Veröffentlichungsnummer: WO 2018/018058

(56) Entgegenhaltungen:
- EP-A1- 2 586 544
- WO-A1-2012/151600
- AT-A1- 514 292
- JP-A- H09 253 753

## Beschreibung

Die Erfindung betrifft ein Verfahren zum Betreiben einer Werkstückbearbeitungsmaschine, und eine Werkstückbearbeitungsmaschine gemäß dem Wortlaut der Patentansprüche.

Im technischen Bereich der Werkstückbearbeitung kommen heutzutage zumeist automatisiert gesteuerte Bearbeitungsmaschinen zum Einsatz. Zur Verbesserung der Produktivität werden bei derartigen Maschinen üblicherweise möglichst viele Maschinenkomponenten automatisiert durch eine Steuerungsvorrichtung gesteuert verstellt bzw. verfahren. Ein typisches und häufig eingesetztes Beispiel für eine solche Steuerung ist die sogenannte CNC-Steuerung (Computerized Numeric Control; rechnergestützte, numerische Steuerung).

Bei derartigen automatisierten bzw. CNC-gesteuerten Prozessen werden Maschinenkomponenten beispielsweise entlang angetriebener Verfahr- bzw. Verstellachsen in vorbestimmbare bzw. vorprogrammierbare Positionen im jeweiligen Maschinenkoordinatensystem verstellt. Solche rechner- bzw. programmgesteuerte Verstellungen von Maschinenkomponenten bergen jedoch ein inhärentes Gefahrenpotential aufgrund der Automatisierung der ausgeführten Verfahr- bzw. Verstellbewegungen. Zum Beispiel besteht grundsätzlich ein gewisses Kollisionsrisiko zwischen Maschinenkomponenten untereinander oder mit anderen Objekten, was zu Beschädigungen an einer jeweiligen Maschine führen kann. Solche Kollisionen sind beispielsweise aufgrund programmtechnisch fehlerhafter Vorgabe von Soll- bzw. Anfahrpositionen, unsachgemäßer Bedienung bzw. bei Bedienungsfehlern, nicht vorgesehenen bzw. irrtümlich platzierten Hindernissen, etc. möglich.

Bei teil- oder vollautomatisierten Prozessen ist vor allem die Sicherheit von Bedienpersonal bzw. allgemein die Personensicherheit zu beachten. Insbesondere ist bei automatisiert ausgeführten Verstell- bzw. Verfahrbewegungen ein gewisses Risikopotential hinsichtlich einer Kollision einer verfahrenen bzw. verstellten Maschinenkomponente mit der Bedienperson bzw. einem Körperteil einer Person gegeben, beispielsweise auch aufgrund von Unachtsamkeit einer Bedienperson. Im schlimmsten Fall können durch derartige Kollisionen schwere Verletzungen verursacht werden, insbesondere beim automatisierten Verfahren bzw. Verstellen von schweren bzw. von leistungsstarken Antriebsorganen angetriebenen Maschinenkomponenten.

In der Vergangenheit wurden bereits einige Lösungen zur Überwachung von teil- oder vollautomatisierten Prozessen vorgeschlagen. In der JP 2006061959 A ist beispielsweise eine Überwachung des Arbeitsbereiches einer Abkantpresse vorgeschlagen. Dieses Dokument offenbart ein Verfahren, bei welchem eine Laserlinie im Biegebereich der Presse auf eine flache Oberfläche eines bereits positionierten Werkstücks projiziert wird, und dieser Bereich mit einer Kamera überwacht wird. Dringt ein Objekt bzw. ein Hindernis, beispielsweise die Hand eine Person, in den Bereich zwischen der Linienlichtquelle und der Werkstückoberfläche ein, kann dieses Hindernis durch eine bildlich erfassbare Unterbrechung der auf das Werkstück projizierten Lichtlinie mittels der Kamera erkannt werden. Nach Erfassung bzw. Erkennung eines Hindernisses im Überwachungsbereich kann im gegebenen Fall ein Absenken des Pressstempels der Abkantpresse umgehend gestoppt werden. Durch diese Methode kann jedoch keine automatisierte Verstellbewegung einer Maschinenkomponente überwacht werden. Im Besonderen kann hierdurch keine Verstellbewegung eines Anschlagfingers überwacht werden.

Häufig bei Werkstückbearbeitungsmaschinen automatisiert gesteuert verstell- bzw. verfahrbare Maschinenkomponenten sind sogenannte Anschlagvorrichtungen. Derartige Anschlagvorrichtungen werden primär zur Positionierung eines zu bearbeitenden Werkstücks in einer Arbeitsstellung verwendet. Üblicherweise weisen derartige Anschlagvorrichtungen einen oder mehrere verstell- bzw. verfahrbare Anschlagfinger mit Anlegeflächen und/oder Auflageflächen auf, an welchen Flächen ein Werkstück für die Positionierung an den Anschlagfinger an- bzw. auf den Anschlagfinger aufgelegt werden kann. Zur vorgesehenen Positionierung der Werkstücke werden derartige Anschlagfinger hierbei im ordnungsgemäßen Betrieb zuerst in eine bestimmte Anschlagposition verstellt. Anschließend kann ein zu bearbeitendes Werkstück automatisiert, oft aber auch manuell durch eine Bedienperson am Anschlagfinger positioniert werden. Insbesondere bei Biegemaschinen sind solche Anschlagvorrichtungen häufig als sogenannte Hinteranschläge ausgeführt.

Zur Vermeidung von Kollisionen eines solchen Anschlagfingers mit anderen Objekten im Zuge einer automatisiert gesteuerten Verfahrbewegung existieren Lösungen, bei welchen die Bewegungsgeschwindigkeit eines Anschlagfingers insbesondere bei Annäherung an die Anschlag- bzw. Sollposition stark reduziert wird, und/oder die Verstellbewegung bei Annäherung an die Anschlagposition antriebstechnisch kraftreduziert ausgeführt wird. Des Weiteren wurde in der Vergangenheit vorgeschlagen, eine automatisierte Verstellbewegung im Annäherungsbereich an die Anschlagposition zu stoppen, und die endgültige, angetriebene Verstellung des Anschlagfingers in die Anschlagposition erst nach bewusster Freigabe durch einen Bediener auszuführen. Vorgeschlagen wurden außerdem sensortechnische Lösungen um eine automatisierte Verstellung eines Anschlagfingers zu überwachen, wie etwa eine Überwachung der Stromaufnahme eines Antriebsorgans für den Anschlagfinger.

WO 2012/151600, die als der nächstliegende Stand der Technik für die unabhängigen Ansprüche 1 und 23 betrachtet wird, offenbart eine Sensoranordnung zur Überwachung einer automatisiert gesteuerten Annäherungsbewegung eines Anschlagfingers in eine Anschlagposition entlang einer angetriebenen CNC-Achse offenbart. Die Sensoranordnung kann hierbei ein am Anschlagfinger angebrachtes Sensorelement umfassen. Offenbart sind an dem Anschlagfinger selbst angebrachte mechanische Kontaktschalter, Kraftmesselemente und Näherungsschalter. Alternativ kann auch eine Kamera in Verbindung mit einem Objekt- bzw. Strukturerkennungssystem zur strukturellen Erkennung von bestimmten Objekten verwendet werden. Jedes dieser vorbekannten Sensorsysteme ist jedoch mit Nachteilen behaftet, beispielsweise späte Erfassung eines Hindernisses erst bei Kontakt, unpräzise Erkennung, limitierter Erfassungsbereich, oder erfordern für die Erkennung von Hindernissen erheblichen rechnerischen Aufwand.

Im technischen Bereich der Werkstückbearbeitungsmaschinen besteht daher weiter Verbesserungsbedarf hinsichtlich der Überwachung von automatisiert gesteuerten Verfahrbewegungen von Anschlagfingern.

Aufgabe der vorliegenden Erfindung war es somit, ein verbessertes Verfahren zum Betreiben einer Werkstückbearbeitungsmaschine, sowie eine entsprechende Werkstückmaschine zur Verfügung zu stellen.

Diese Aufgabe wird durch ein Verfahren zum Betreiben von Werkstückbearbeitungsmaschinen und eine Werkstückbearbeitungsmaschine gemäß den Ansprüchen gelöst.

Das Verfahren zum Betreiben einer Werkstückbearbeitungsmaschine, insbesondere einer Biegemaschine umfasst automatisiert gesteuertes Verstellen bzw. Verfahren zumindest eines Anschlagfingers einer Anschlagvorrichtung entlang zumindest einer angetriebenen Verfahr- bzw. Verstellachse, beispielsweise eine CNC-Achse, in eine zum Positionieren eines zu bearbeitenden Werkstücks vorgesehene Anschlagposition.
Des Weiteren umfasst das Verfahren ein Positionieren des Werkstück durch Anlegen des Werkstücks an einer Anlegefläche des Anschlagfingers.

Wesentlich ist, dass während einer automatisiert gesteuerten Verfahr- bzw. Verstellbewegung des Anschlagfingers entlang der zumindest einen Verstellachse, mittels einer mit dem Anschlagfinger entlang der zumindest einen Verstellachse bewegungsgekoppelten Beleuchtungsvorrichtung, ein erstes Lichtbündel in einen dem Anschlagfinger in Verstellrichtung vorauseilenden Bereich gestrahlt wird.
Weiters wird mittels wenigstens einer ortsfesten, optischen Erfassungsvorrichtung ein Überwachungsbereich für Verstellbewegungen des Anschlagfingers überwacht. Die wenigstens eine optische Erfassungsvorrichtung ist hierbei zur Erfassung einer durch das erste Lichtbündel auf einer Objektoberfläche abgebildeten, ersten Lichtabbildung ausgebildet.
Bei einer Erfassung einer durch das erste Lichtbündel auf einer Objektfläche abgebildeten ersten Lichtabbildung, wird umgehend eine automatisiert gesteuerte Sicherheitsmaßnahme eingeleitet bzw. ausgelöst.

Durch die vorgeschlagenen Maßnahmen kann ein in erkennungs- und sicherheitstechnischer Hinsicht verbessertes Verfahren zum Betreiben einer Werkstückbearbeitungsmaschine bereitgestellt werden. Durch die angegebenen Maßnahmen können Hindernisse, beispielsweise eine menschliche Hand oder ein Finger, im Verstellbereich des Anschlagfingers, insbesondere in der besonders sicherheitsrelevanten Verstellrichtung des Anschlagfingers, in welcher Verstellrichtung besonders hohes Kollisionsrisiko mit Hindernissen besteht, erkennungssicher und rasch erfasst werden. Aufwendige und zeitverzögernde Rechenoperationen zur Objekt- bzw. Strukturerkennung sind hierbei nicht erforderlich, und kann dennoch ein ausgedehnter, im Prinzip uneingeschränkter Bereich der Werkstückbearbeitungsmaschine für Verfahrbewegungen eines Anschlagfingers hinsichtlich Hindernissen überwacht werden. Des Weiteren können zykluszeitverzögernde Maßnahmen, wie etwa eine Verringerung der Verfahr- bzw. Verstellgeschwindigkeit bei Annäherung an die Anschlagposition oder eine kraftreduzierte Annäherung des Anschlagfingers erübrigt werden, ohne dass Kompromisse hinsichtlich der Sicherheit, im Besonderen hinsichtlich der Personensicherheit eingegangen werden müssen. Hierdurch kann die Bearbeitung der Werkstücke mit möglichst geringen Zyklus- bzw. Taktzeiten, und damit einer möglichst hohen Produktivität durchgeführt werden. Des Weiteren kann durch die angegebenen Verfahrensmaßnahmen eine Kollision des Anschlagfingers während einer automatisiert gesteuerten Verstellbewegung nicht nur abgeschwächt, sondern im Prinzip gänzlich verhindert werden.

Besonders vorteilhaft können die angegebenen Maßnahmen für den Betrieb von Biegemaschinen, im Besonderen für das Betreiben von Gesenkbiegemaschinen bzw. Abkantpressen eingesetzt werden, da bei solchen Maschinen häufig automatisiert gesteuerte Anschlagfinger zum Einsatz kommen.

Als Sicherheitsmaßnahme kann beispielsweise ein unverzügliches Stoppen der Verstellbewegung des Anschlagfingers ausgelöst werden, oder sogar eine umgehende Stillsetzung der gesamten Werkstückbearbeitungsmaschine eingeleitet werden. Alternativ und/oder zusätzlich kann zum Beispiel ein Warnsignal bzw. Alarm ausgelöst werden.

Das von der Beleuchtungsvorrichtung abgestrahlte, erste Lichtbündel kann beispielsweise durch einen Lichtkegel, Lichtzylinder oder eine andere Lichtbündelstruktur gebildet sein, durch welche Lichtbündelstruktur auf eine im Strahlengang befindlichen Objektoberfläche als erste Lichtabbildung zum Beispiel eine kreis- oder ellipsenförmige Fläche, oder eine kreis- oder ellipsenförmige Linie abgebildet werden kann. Grundsätzlich können zur Erzeugung des Lichtbündels beliebige geeignete, optische Elemente in Verbindung mit der Beleuchtungsvorrichtung verwendet werden, solange sichergestellt wird, dass das Lichtbündel in einen dem Anschlagfinger während einer Verstellbewegung vorauseilenden Bereich gestrahlt werden kann, ohne dass eine erste Lichtabbildung auf einer Oberfläche der Maschine bzw. einer Maschinenkomponente hervorgerufen wird.

Wesentlich ist hierbei, dass die erste Lichtabbildung auf einer Oberfläche möglichst rasch und erkennungssicher durch die wenigstens eine optische Erfassungsvorrichtung erkannt werden kann. Im Besonderen kann das von der Beleuchtungsvorrichtung abgestrahlte Licht monochromatisch sein. In diesem Zusammenhang kann die wenigstens eine optische Erfassungsvorrichtung beispielsweise spezifisch zur sicheren Erkennung bzw. Erfassung des von der Beleuchtungsvorrichtung abgestrahlten Lichtes bzw. Lichtbündels ausgebildet sein, insbesondere zur möglichst sicheren Erfassung von Licht mit der abgestrahlten Wellenlänge.

Grundsätzlich ist es natürlich möglich, dass mehrere Überwachungsbereiche zur Überwachung der Verstellbewegungen von Anschlagfingern bzw. zur Erfassung von Hindernissen vorgesehen sind. Hierzu können mehrere Erfassungsvorrichtungen an der Werkstückbearbeitungsmaschine angeordnet sein. Mehrere Überwachungsbereiche einzelner, optischer Erfassungsvorrichtungen können hierbei rechnerisch zu einem ausgedehnten Überwachungsbereich zusammengefasst werden. Dadurch kann eine möglichst lückenlose Überwachung der Verstellbewegungen des Anschlagfingers im Bereich der ganzen Werkstückbearbeitungsmaschine auch bei Vorhandensein erfassungstechnisch hinderlicher, konstruktiver Elementen der Maschine, wie etwa Verstrebungen und Dergleichen, durchgeführt werden. Für in sicherheitstechnischer Hinsicht unbedenkliche Bereiche der Werkstückbearbeitungsmaschine, kann eine Überwachung allenfalls erübrigt werden.

Bei einer Weiterbildung des Verfahrens kann vorgesehen sein, dass die Beleuchtungsvorrichtung bewegungsgekoppelt wenigstens entlang zwei Verfahr- bzw. Verstellachsen mit dem Anschlagfinger verstellt wird.

Hierdurch kann in einfacher Art und Weise realisiert werden, dass während einer Verstellbewegung des Anschlagfingers entlang der wenigstens zwei Verstellachsen, das erste Lichtbündel in den dem Anschlagfinger vorauseilenden Bereich gestrahlt ist. Die Beleuchtungsvorrichtung kann hierzu beispielsweise an einer Oberfläche der Anschlagsvorrichtung, beispielsweise an einer Konsole angeordnet bzw. montiert sein. Dadurch können auch Positionierungsfehler betreffend den Strahlengang des ersten Lichtbündels in den dem Anschlagfinger in Verstellrichtung vorauseilenden Bereich zumindest weitestgehend hintangehalten werden. Im Falle des Betreibens einer Biegemaschine, insbesondere einer Abkantpresse, ist Bewegungskopplung der Beleuchtungsvorrichtung entlang zweier Verstellachsen besonders zweckmäßig, da auf diese Weise besonders sicherheitsrelevante bzw. kollisionsgefährdete, automatisierte Verstellbewegungen eines Anschlagfingers überwacht werden können. Dies gilt insbesondere sowohl für Verstellbewegungen entlang einer sogenannten X-Achse, also horizontal entlang einer in Richtung einer Werkstückzufuhrseite bzw. einer Biegeebene weisenden Verstellachse, als auch entlang einer sogenannten Z-Achse, also entlang eine horizontalen, parallel zu einer Arbeitsfläche bzw. einem Tischbalken einer Abkantpresse verlaufende Verstellachse der Werkstückbearbeitungsmaschine.

Es kann aber auch vorgesehen sein, dass das erste Lichtbündel über eine optische Spiegelfläche, insbesondere eine flache Spiegelfläche in den dem Anschlagfinger in Verstellrichtung vorauseilenden Bereich gerichtet wird.

Durch diese Maßnahme kann im Besonderen Bewegungskopplung der Beleuchtungsvorrichtung bzw. des ersten Lichtbündels mit dem Anschlagfinger einfach und effizient bewerkstelligt werden. Die Beleuchtungsvorrichtung kann wiederum zum Beispiel an einer Konsole der Anschlagsvorrichtung angeordnet werden, und das erste Lichtbündel während einer Verfahbewegung des Anschlagfingers über die Spiegelfläche in den dem Anschlagfinger vorauseilenden Bereich umgelenkt werden. Durch die flache Spiegelfläche ist auch eine positionsgenaue Umlenkung des ersten Lichtbündels in den dem Anschlagfinger in Verstellrichtung vorauseilenden Bereich möglich. Hierbei kann der Strahlengang des ersten Lichtbündels auch durch einen geschützten bzw. wenigstens weitestgehend nicht zugänglichen Innenbereich der Werkstückbearbeitungsmaschine geleitet werden, sodass eine unbeabsichtigte bzw. ungewollte Auslösung einer Sicherheitsmaßnahme aufgrund einer unsachgemäßen Unterbrechung des ersten Lichtbündels wirksam hintangehalten werden kann. Die Dimensionen der optischen Spiegelfläche können hierbei groß genug gewählt werden, um in Abhängigkeit von der Anordnung der Beleuchtungsvorrichtung, ein Einstrahlen des ersten Lichtbündels in den gesamten zu überwachenden Bereich bzw. zumindest in einen sicherheitsrelevanten Bereich der Werkstückbearbeitungsmaschine gewährleisten zu können.

Bei einer weiteren Verfahrensmaßnahme kann vorgesehen sein, das erste Lichtbündel zumindest weitestgehend paralleles Lichtbündel, dessen Strahlengang eine erste, ebene Lichtfläche bildet, in den dem Anschlagfinger vorauseilenden Bereich gestrahlt wird. Das erste Lichtbündel wird hierbei also als wenigstens nur geringfügig divergentes Lichtbündel eingestrahlt, dessen Strahlengang in wenigstens der ersten Lichtfläche liegt.

Bei Verwendung einer entsprechend ausbildeten Beleuchtungsvorrichtung bzw. Lichtquelle, kann ein räumlich begrenztes, erstes Lichtbündel in den dem Anschlagfinger vorauseilenden Bereich gestrahlt werden. Von Vorteil ist hierbei, dass eine unbeabsichtigte Bestrahlung einer Objektfläche im Bereich der Maschine durch das erste Lichtbündel, und damit eine ungewollte Erfassung der ersten Lichtabbildung durch die wenigstens eine Erfassungsvorrichtung wirksam hintangehalten werden kann. Dadurch kann auch ein ungewolltes Stillsetzen des Anschlagsfingers, oder der gesamten Werkstückbearbeitungsmaschine hintangehalten werden. Das erste Lichtbündel bzw. dessen Strahlengang wird bei dieser Ausführungsform quasi als ebene Lichtfläche, also in einer Ebene eingestrahlt. Die Form der ersten Lichtabbildung auf einer flachen, horizontal ausgerichteten Objektoberfläche ist hierbei durch einen Lichtstreifen bzw. eine Lichtlinie gegeben.

In weiterer Folge kann es zweckmäßig sein, wenn das erste Lichtbündel derart in den dem Anschlagfinger in Verstellrichtung vorauseilenden Bereich gestrahlt wird, dass eine quer zum bzw. senkrecht auf den Strahlengang verlaufende Lichtbündelquerachse der ersten Lichtfläche zumindest weitestgehend parallel zu einer Anlegefläche des Anschlagfingers ausgerichtet ist.

Auf diese Weise kann das erste Lichtbündel primär in Richtung der Verstellbewegung des Anschlagfingers räumlich begrenzt werden. Dennoch kann ein Hindernis in Verstellrichtung sicher durch Erfassen der ersten Lichtabbildung auf einer Oberfläche des Hindernisses sicher und rasch erfasst werden.

In diesem Zusammenhang kann es außerdem von Vorteil sein, wenn das erste Lichtbündel derart in den dem Anschlagfinger in Verstellrichtung vorauseilenden Bereich gestrahlt wird, dass eine parallel zu der Lichtbündelquerachse verlaufende Breitenerstreckung der ersten Lichtfläche im Bereich des Anschlagfingers größer ist als eine sich zwischen zwei Seitenrändern erstreckende Breite des Anschlagfingers.

Durch diese Maßnahme können auch Hindernisse seitlich bezüglich der Verstellrichtung des Anschlagfingers mittels der wenigstens einen Erfassungsvorrichtung erfasst werden. Dies ist zum Beispiel vorteilhaft zur Erfassung eines unsachgemäßen bzw. nicht ordnungsgemäßen Eingreifens eine Person von einer bezüglich der Verstellrichtung des Anschlagfingers seitlichen Eingriffsseite.

Bei einer bevorzugten Verfahrensvariante, kann vorgesehen sein, dass das erste Lichtbündel mittels einer Beleuchtungsvorrichtung umfassend einen Linienlaser in den in den dem Anschlagfinger in Verstellrichtung vorauseilenden Bereich gestrahlt wird.

Dadurch wird das erste Lichtbündel mittels einer Lichtquelle eingestrahlt, welche zum Einen eine ausreichend hohe Lichtintensität einer ersten Lichtabbildung auf einer Hindernisoberfläche erzeugt. Dadurch kann die Erfassungsgenauigkeit bzw. -geschwindigkeit der ersten Lichtabbildung durch die wenigstens eine Erfassungsvorrichtung gesteigert werden. Außerdem können mit einer derartigen Lichtquelle eng begrenzte, parallele, zumindest vorwiegend monochromatische Lichtbündel erzeugt werden.

Bei einer Weiterbildung des Verfahrens kann vorgesehen sein, dass das erste Lichtbündel in den dem Anschlagfinger in Verfahr- bzw. Verstellrichtung vorauseilenden Bereich wenigstens in einem Mindestabstand zu einer in Verstellrichtung erstvorstoßenden Randbegrenzung des Anschlagfingers gestrahlt wird.

Der Mindestabstand kann zumindest durch einen steuerungs- und antriebstechnisch bedingten, maximalen Anhalteweg für den Anschlagfinger, plus einem maximal möglichen Positionsfehler des Anschlagfingers bzw. der Randbegrenzung des Anschlagfingers gegeben sein.

Bei einer derartigen Verfahrensführung kann das Risiko von Kollisionen des Anschlagfingers mit Hindernissen in Verstellrichtung weiter minimiert werden. Insbesondere können auf diese Weise antriebsbedingte, rechenzeitbedingte bzw. steuerungstechnische, und messtechnisch bedingte Verzögerung bzw. Fehler für ein Anhalten des Anschlagfingers im Falle einer Erfassung der ersten Lichtabbildung berücksichtigt werden. Hierbei kann der Anhalteweg einen antriebsbedingten Bremsweg, sowie einen Reaktionsweg enthalten bzw. berücksichtigen. Der Reaktionsweg wiederum kann durch die Messzeit bzw. Messzykluszeit, also die maximal mögliche verstreichende Zeit vom Erscheinen der ersten Lichtabbildung auf einer Hindernisoberfläche bis zum Erfassen der ersten Lichtabbildung, und durch die durch Buszyklen und Berechnungszyklen einer Steuerungsvorrichtung bedingten Verzögerungen, bestimmt sein.

Im Prinzip kann es zweckmäßig sein, wenn eine direkt an einem Anschlagfinger angeordnete bzw. befestigte Beleuchtungsvorrichtung bei jeder Verstellbewegung des Anschlagfingers mit dem Anschlagfinger bewegungsgekoppelt mitverstellt wird. Die Beleuchtungsvorrichtung kann in solchen Fällen zum Beispiel mehrere Lichtquellen aufweisen, welche jeweils ein Lichtbündel in den jeweils dem Anschlagfinger vorauseilenden Bereich strahlen. Dadurch kann jede Verstellbewegung bzw. jede Verstellrichtung eines Anschlagfingers auf Hindernisse überwacht werden.

Es kann aber auch vorteilhaft sein, wenn die Beleuchtungsvorrichtung in Richtung einer senkrecht zu einer Aufstandsfläche ausgerichteten, vertikalen Verstellachse nicht verstellt wird.

Derartige vertikal ausgeführten Verfahrbewegungen bzw. Höhenverstellungen eines Anschlagfingers erfolgen zum Beispiel, wenn eine bestimmte Anlege- und/oder Auflagefläche des Anschlagfingers mit einer Arbeitsfläche in gleiche Höhe gebracht werden sollen. Insbesondere im Falle von Biegemaschinen bzw. Abkantpressen wird diese Vertikalverstellachse als R-Verstell-Achse bezeichnet. Vertikalverstellbewegungen entlang der R-Verstellachse erfolgen üblicherweise lediglich über sehr kurze Strecken. Des Weiteren werden Vertikalverstellungen eines Anschlagfingers üblicherweise in einem in sicherheitstechnischer Hinsicht nicht besonders relevanten Bereich einer Maschine ausgeführt, weshalb eine Überwachung in solchen Fällen vorteilhafterweise erübrigt werden kann.

Bei einer bevorzugten Weiterbildung kann vorgesehen sein, dass mittels der mit dem Anschlagfinger bewegungsgekoppelten Beleuchtungsvorrichtung eine zweite Lichtabbildung auf eine mittels der wenigstens einen optischen Erfassungsvorrichtung erfassbare Oberfläche des Anschlagfingers projiziert wird, wobei die zweite Lichtabbildung zumindest bei mit dem Anschlagfinger bewegungsgekoppelten Verstellbewegungen der Beleuchtungsvorrichtung permanent auf die Oberfläche des Anschlagfingers projiziert wird.

Diese Maßnahme bringt den Vorteil, dass dadurch eine zweite Lichtabbildung auf der Oberfläche des Anschlagfingers generiert werden kann, welche Lichtabbildung zumindest in dem bzw. den Überwachungsbereich(en) permanent durch die wenigstens eine Erfassungsvorrichtung erfassbar ist. Dadurch ist eine sicherheitsrelevante Maßnahme zur Funktionsüberprüfung der Beleuchtungsvorrichtung und/oder der wenigstens einen optischen Erfassungsvorrichtung bereitgestellt. Die zweite Lichtabbildung kann durch ein zweites, auf die Oberfläche des Anschlagfingers angestrahltes Lichtbündel erzeugt werden. Hierzu kann die Beleuchtungsvorrichtung grundsätzlich eine weitere Lichtquelle zusätzlich zur Lichtquelle, welche das erste Lichtbündel generiert, umfassen. Es kann jedoch auch eine Lichtquelle zur Erzeugung sowohl des ersten als auch des zweiten Lichtbündels bzw. der Projektion der zweiten Lichtabbildung vorgesehen sein. Die zweite Lichtabbildung kann grundsätzlich auf jede Oberfläche des Anschlagfingers projiziert werden, welche Oberfläche im Rahmen der Verstellbewegungen des Anschlagfingers innerhalb dem oder den Überwachungsbereichen(en) der wenigstens einen optischen Erfassungsvorrichtung liegt, und damit permanent durch die optische(n) Erfassungsvorrichtung(en) erfassbar ist. Beispielsweise kann vorgesehen sein, dass die zweite Lichtabbildung auf einen in Richtung der Werkstückzufuhrseite der Werkstückbearbeitungsmaschine weisenden, vorderen Bereich der Oberfläche des Anschlagfingers projiziert wird. Falls der betreffende Anschlagfinger beispielsweise Auflageflächen zum Auflegen eines zu bearbeitenden Werkstücks aufweist, kann aber auch vorgesehen sein, dass die zweite Lichtabbildung auf eine zuoberst angeordnete Oberfläche des Anschlagfingers projiziert wird.

In weiterer Folge kann für den Fall, dass im Betrieb der Werkstückbearbeitungsmaschine die zweite Lichtabbildung nicht erfasst wird, umgehend eine Sicherheitsmaßnahme eingeleitet werden. Eine Maßnahme kann beispielsweise zumindest ein Auslösen eines Alarmes durch die Steuerungsvorrichtung umfassen. In weiterer Folge ist es auch denkbar, dass die Werkstückbearbeitungsmaschine oder zumindest der betreffende Anschlagfinger, auf welchem keine zweite Lichtabbildung erfasst wird, umgehend stillgesetzt bzw. angehalten oder wenigstens in einen sicheren Zustand versetzt werden. Anschließend können Instandsetzungsmaßnahmen bzw. Reparaturmaßnahmen zur Behebung einer Funktionsstörung eingeleitet bzw. durchgeführt werden.

In weiterer Folge kann auch vorgesehen sein, dass bei eine Nichterfassung der zweiten Lichtabbildung wiederum eine Sicherheitsmaßnahme eingeleitet wird, beispielsweise der Betrieb der Werkstückbearbeitungsmaschine gestoppt wird. Sodann kann zum Beispiel eine Funktionsprüfung der betreffenden Beleuchtungsvorrichtung und der betreffenden optischen Erfassungsvorrichtung vorgenommen werden, und es können im Falle von Funktionsstörungen Instandsetzungs- bzw. Reparaturmaßnahmen eingeleitet bzw. durchgeführt werden.

Es kann auch vorgesehen sein, dass die zweite Lichtabbildung in Form eines parallel zu einer Anlegefläche des Anschlagfingers verlaufenden bzw. ausgerichteten, zweiten Lichtstreifens auf die Oberfläche des Anschlagfingers projiziert wird.

Des Weiteren kann es zweckmäßig sein, dass mittels der mit dem Anschlagfinger bewegungsgekoppelten Beleuchtungsvorrichtung ein parallel zum zweiten Lichtstreifen verlaufender bzw. ausgerichteter, dritter Lichtstreifen beabstandet zum zweiten Lichtstreifen auf die Oberfläche des Anschlagfingers projiziert wird, wobei der dritte Lichtstreifen wiederum zumindest bei mit dem Anschlagfinger bewegungsgekoppelten Verstellbewegungen der Beleuchtungsvorrichtung permanent auf die Oberfläche des Anschlagfingers projiziert wird. Der zweite und der dritte Lichtstreifen sind hierbei auf einer flachen Oberfläche des Anschlagfingers unabhängig von dem Blickwinkel bzw. der Betrachtungsposition der Erfassungsvorrichtung, als parallel zueinander ausgerichtete, geradlinige Lichtstreifen bzw. Lichtlinien erfassbar.

In diesem Zusammenhang kann es von Vorteil sein, dass der Überwachungsbereich mittels wenigstens einer ortsfesten, bilderfassenden Kamera, insbesondere mittels wenigstens einer CCD-Kamera überwacht wird.

Durch Vorsehen einer bilderfassenden Kamera, kann die Position einer permanent auf die Oberfläche eines Anschlagfingers projizierten, zweiten Lichtabbildung bzw. zweiten Lichtstreifens, und/oder eines dritten Lichtstreifens grundsätzlich im Blickfeld bzw. im Überwachungsbereich der jeweiligen, bilderfassenden Kamera bestimmt werden, da die Anbringungs- und Ausrichtungskoordinaten einer solchen ortsfest angeordneten, bilderfassenden Kamera bekannt sind. Auf diese Weise kann bei mit dem Anschlagfinger bewegungsgekoppelten Verstellbewegungen der Beleuchtungsvorrichtung auch die Position des Anschlagfingers ermittelt werden. Der zweite und/oder dritte Lichtstreifen dienen hierbei als gut erfassbare Referenzlinien bzw. -streifen für die bilderfassende Kamera.

Im Besonderen kann vorgesehen sein, dass aus der bildlich bzw. abbildlich mit der Kamera erfassten Lage des zweiten und/oder des dritten Lichtstreifens im Überwachungsbereich, eine Position des Anschlagfingers rechnerisch ermittelt wird.

Dadurch kann die Position des zweiten und/oder dritten Lichtstreifens, beispielsweise entlang der sogenannten Z-Achse, also entlang einer horizontalen, parallel zu einer Arbeitsfläche bzw. einem Tischbalken einer Abkantpresse verlaufende Verstellachse für den Anschlagfinger, bestimmt werden. Im Falle bei entlang der Z-Achse mit dem Anschlagfinger bewegungsgekoppelter Anordnung der Beleuchtungsvorrichtung kann so auch die Position des Anschlagfingers entlang der Z-Achse bestimmt werden. Selbiges gilt natürlich auch für alle Verstellachsen, entlang welcher der Anschlagfinger verstellt werden kann, sofern die Beleuchtungsvorrichtung entlang der jeweiligen Verstellachse mit dem Anschlagfinger bewegungsgekoppelt verstellt wird.

Es kann aber auch von Vorteil sein, dass aus einem bildlich erfassten, scheinbaren Normalabstand zwischen dem zweiten Lichtstreifen und dem dritten Lichtstreifen, ein Abstand einer werkstückzufuhrseitigen Randbegrenzung des Anschlagfingers zu der Kamera, rechnerisch ermittelt wird.

Die ist insbesondere zweckmäßig, um Verstellbewegungen des Anschlagfingers in sogenannter X-Richtung, also horizontal entlang einer in Richtung einer Werkstückzufuhrseite bzw. einer Biegeebene weisenden Verstellachse zu überwachen bzw. bildlich zu verfolgen. Letztlich kann aufgrund der Kenntnis des realen Normalabstandes zwischen dem zweiten und dem dritten Lichtstreifen, sowie Kenntnis der Position und Ausrichtung der wenigstens einen ortsfesten Kamera, aus dem bildlich erfassten, aus dem Blickwinkel der ortsfesten Kamera erfassten, scheinbaren Normalabstand zwischen den beiden Lichtstreifen, auch ein Abstand zu Bezugspunkten, wie zum Beispiel ein Abstand zu den Koordinaten einer anzufahrenden Anschlagposition rechnerisch ermittelt werden.

Bei einer weiteren Verfahrensvariante kann vorgesehen sein, dass das erste Lichtbündel bei einem automatisiert gesteuerten Start einer Verstellbewegung des Anschlagfingers in eine Anschlagposition umgehend aktiviert wird.

Dadurch kann sichergestellt werden, dass die Überwachung der entsprechenden Verstellbewegung umgehend aktiviert wird, und die Betriebssicherheit gewährleistet ist.

Es kann aber auch vorgesehen sein, dass das erste Lichtbündel bei Erreichen einer steuerungstechnisch vorgegebenen Anschlagposition umgehend deaktiviert wird.

Auf diese Weise kann ein ungewolltes Auslösen von Sicherheitsmaßnahmen wirksam hintangehalten werden. Zum Beispiel kann hintangehalten werden, dass im Falle eines Eindringens einer Hand einer Bedienperson in den Strahlengang des ersten Lichtbündels, beispielsweise um ein Werkstück manuell an einer Anlegefläche des Anschlagfingers zu positionieren, die erste Lichtabbildung erfasst und eine Sicherheitsmaßnahme ausgelöst wird. Die angegebene Maßnahme stellt hierbei kein Sicherheitsrisiko dar, da keine Kollisionsgefahr durch eine Verstellbewegung besteht, solange sich der Anschlagfinger in der Anschlagposition befindet.

Außerdem kann es zweckmäßig sein, wenn das erste Lichtbündel während einer Verstellbewegung in eine Anschlagposition, in einem steuerungstechnisch vorgebbaren Abstand von der jeweiligen Anschlagposition während der Verstellbewegung bis zum Erreichen der jeweiligen Anschlagposition deaktiviert wird.

Dadurch können ungewollte Auslösungen von Sicherheitsmaßnahmen beispielsweise dann hintangehalten werden, wenn aufgrund der vorgegebenen Koordinaten einer Anschlagposition bekannt ist, dass sich bei Annäherung des Anschlagfingers an die Anschlagposition zwangsläufig ein Objekt bzw. eine Objektfläche im Strahlengang des ersten Lichtbündels befinden wird. Bei einem solchen Objekt kann es sich zum Beispiel um eine andere Maschinenkomponente der Werkstückbearbeitungsmaschine handeln.

Des Weiteren kann es vorteilhaft sein, wenn das erste Lichtbündel bei einem Stillstand des Anschlagfingers grundsätzlich deaktiviert wird.

Bei einer bevorzugten Weiterbildung des Verfahrens kann vorgesehen sein, als automatisiert gesteuerte Sicherheitsmaßnahme eine unverzügliche Rückstellbewegung des Anschlagfingers ausgelöst wird.

Durch diese Verfahrensmaßnahme kann die Betriebssicherheit, insbesondere die Personensicherheit nochmalig weiter gesteigert werden, da ein Anschlagfinger umgehend aus einem potentiellen Gefahrenbereich entfernt werden kann. Die Rückstellbewegung kann hierbei mittels eines jeweiligen Antriebs der entsprechenden Verstellachse ausgeführt werden. Alternativ und/oder zusätzlich können zur Ausführung einer Rückstellbewegung für einen Anschlagfinger aber auch gesonderte Antriebsmittel bereitgestellt werden, welche gesonderten Rückstellantriebsmittel bevorzugt vor allem schnellauslösbar ausgeführt sind.

Des Weiteren kann es zweckmäßig sein, dass bei einem Stillstand des Anschlagfingers grundsätzlich keine automatisiert gesteuerte Sicherheitsmaßnahme ausgelöst wird.

Auch hierdurch kann ein ungeplantes bzw. ungewolltes Unterbrechen des Betriebes der Werkstückmaschine wirksam hintangehalten werden.

Schließlich kann es von Vorteil sein, wenn das erste Lichtbündel während einer entlang einer horizontal verlaufenden Verstellachse in Richtung einer Werkstückzufuhrseite ausgeführten Verstellbewegung des Anschlagfingers in eine Anschlagposition, in einen dem Anschlagfinger vorauseilenden Bereich gestrahlt wird.

Hierdurch kann eine einfach durchzuführende aber dennoch effiziente Maßnahme zur Überwachung einer Verstellbewegung eines Anschlagfingers unmittelbar in eine Anschlagposition bereitgestellt werden.

Die Aufgabe der Erfindung wird aber auch dadurch gelöst, dass eine Werkstückbearbeitungsmaschine, insbesondere Biegemaschine gemäß den Merkmalen der Ansprüche bereitgestellt wird.

Die Werkstückbearbeitungsmaschine weist eine automatisiert gesteuerte Anschlagvorrichtung, umfassend zumindest einen automatisiert gesteuert entlang zumindest einer angetriebenen Verstellachse verfahrbaren Anschlagfinger mit wenigstens einer zum Anlegen des umzuformenden Werkzeugs vorgesehenen Anlegefläche auf.
Zur automatisierten Steuerung von Verstell- bzw. Verfahrbewegungen des Anschlagfingers entlang der zumindest einen Verstellachse, weist die Werkstückbearbeitungsmaschine eine Steuerungsvorrichtung auf.

Wesentlich ist, dass die Werkstückbearbeitungsmaschine eine mit der Steuerungsvorrichtung signalverbundene Überwachungsvorrichtung aufweist, welche eine Beleuchtungsvorrichtung und wenigstens eine optische Erfassungsvorrichtung umfasst. Vorgesehen ist hierbei, dass die Beleuchtungsvorrichtung mit dem Anschlagfinger bewegungsgekoppelt angeordnet ist, und im Betrieb der Werkstückbearbeitungsmaschine während einer automatisiert gesteuerten Verstellbewegung des zumindest einen Anschlagfingers, zur Abstrahlung eines ersten Lichtbündels in einen dem Anschlagfinger in Verstellrichtung vorauseilenden Bereich ausgebildet ist. Außerdem ist vorgesehen, dass die wenigstens eine Erfassungsvorrichtung zur Erfassung einer durch das erste Lichtbündel beim Auftreffen auf eine Objektfläche hervorgerufenen, ersten Lichtabbildung ausgebildet ist, und ortsfest zur Überwachung eines Überwachungsbereiches angeordnet ist.

Bei aktiviertem, ersten Lichtbündel und einer Erfassung der ersten Lichtabbildung durch die wenigstens eine optische Erfassungsvorrichtung während der Verstellbewegung des Anschlagfingers, ist die Steuerungsvorrichtung zum unverzüglichen Auslösen wenigstens einer Sicherheitsmaßnahme ausgebildet.

Durch diese technischen Merkmale kann eine sicherheitstechnisch verbesserte Werkstückbearbeitungsmaschine zur Verfügung gestellt werden. Im Besonderen können Hindernisse im Verstellbereich des Anschlagfingers, insbesondere in der besonders sicherheitsrelevanten Verstellrichtung des Anschlagfingers erkennungssicher und rasch erfasst werden. In Verstellrichtung des Anschlagfingers besteht ein besonders hohes Kollisionspotential mit Hindernissen. Je nach Überwachungsbereich der wenigstens einen Erfassungsvorrichtung, und/oder Anzahl sowie Anordnung bzw. Ausrichtung von Erfassungsvorrichtungen, kann hierbei ein beispielsweise ein bestimmter, sicherheitsrelevanter Bereich der Werkstückbearbeitungsmaschine, oder aber auch ein gesamter, möglicher Verfahr- bzw. Verstellbereich des Anschlagfingers auf Hindernisse überwacht werden. Durch die angegebenen Merkmale kann die Werkstückbearbeitungsmaschine hochproduktiv mit geringen Zykluszeiten betrieben werden, da etwa eine Reduktion der Verstellgeschwindigkeit eines Anschlagfingers in besonders sicherheitsrelevanten Bereichen erübrigt werden kann. Insbesondere kann bei einer Werkstückbearbeitungsmaschine mit den angeführten Merkmalen, eine Kollision des Anschlagfingers während einer automatisiert gesteuerten Verstellbewegung nicht nur abgeschwächt, sondern im Prinzip gänzlich verhindert werden.

Die angegebenen Merkmale sind in besonderem Maße für den Einsatz an Biegemaschinen, insbesondere für den Einsatz in Gesenkbiegemaschinen bzw. Abkantpressen geeignet, da bei solchen Maschinen häufig automatisiert gesteuerte Anschlagfinger zum Einsatz kommen.

Die Beleuchtungsvorrichtung kann beispielsweise eine Lichtquelle umfassen, welche zur Abstrahlung eines Lichtkegels, Lichtzylinders oder einer anderen Lichtbündelstruktur ausgebildet ist. Grundsätzlich können zur Erzeugung des Lichtbündels beliebige geeignete, optische Elemente in Verbindung mit der Beleuchtungsvorrichtung verwendet werden, solange sichergestellt wird, dass das Lichtbündel in einen dem Anschlagfinger während einer Verstellbewegung vorauseilenden Bereich gestrahlt werden kann, ohne dass eine erste Lichtabbildung auf einer Oberfläche der Maschine bzw. einer Maschinenkomponente hervorgerufen wird.

Hierbei ist von Vorteil, wenn die wenigstens eine Erfassungsvorrichtung erfassungs- bzw. erkennungstechnisch auf das von der Beleuchtungsvorrichtung abgestrahlte Licht abgestimmt ist. Beispielsweise kann das von der Beleuchtungsvorrichtung abgestrahlte Licht monochromatisch sein. In diesem Zusammenhang kann die wenigstens eine optische Erfassungsvorrichtung beispielsweise spezifisch zur sicheren Erkennung bzw. Erfassung des von der Beleuchtungsvorrichtung abgestrahlten Lichtes bzw. Lichtbündels ausgebildet sein, insbesondere zur möglichst sicheren Erfassung von Licht mit der durch die Beleuchtungsvorrichtung abgestrahlten Wellenlänge.

Selbstverständlich ist es auch möglich, dass an der Werkstückbearbeitungsmaschine mehrere, optische Erfassungsvorrichtungen angeordnet sind. Die einzelnen Erfassungsvorrichtungen können hierbei jeweils unterschiedliche Überwachungsbereiche erfassen bzw. abdecken, welche Überwachungsbereiche sich überlappen können. Mehrere Überwachungsbereiche einzelner, optischer Erfassungsvorrichtungen können hierbei rechnerisch zu einem ausgedehnten Überwachungsbereich zusammengefasst werden. Dadurch kann eine Werkstückbearbeitungsmaschine mit möglichst lückenloser Überwachung der Verstellbewegungen des Anschlagfingers im Bereich der ganzen Werkstückbearbeitungsmaschine auch bei Vorhandensein erfassungstechnisch hinderlicher, konstruktiver Elementen der Maschine, wie etwa Verstrebungen und Dergleichen, bereitgestellt werden. Für in sicherheitstechnischer Hinsicht unbedenkliche Bereiche der Werkstückbearbeitungsmaschine, kann eine Überwachung allenfalls erübrigt werden.

Sowohl die Beleuchtungsvorrichtung als auch die optische(n) Erfassungsvorrichtung(en) können zwecks allfälliger Justierung des Strahlenganges bzw. eines Überwachungsbereiches jeweils justierbar an der Werkstückbearbeitungsmaschine angeordnet sein. Eine solche Justierung kann beispielsweise bei einem Umbau oder etwa eine Neubestückung der Maschine mit anderen Maschinenkomponenten oder Bearbeitungswerkzeugen erforderlich sein.

Bei einer Weiterbildung der Werkstückbearbeitungsmaschine kann vorgesehen sein, dass die Beleuchtungsvorrichtung wenigstens entlang zweier angetriebener Verfahr- bzw. Verstellachsen mit der Anschlagvorrichtung bewegungsgekoppelt verstellbar angeordnet ist.

Die Beleuchtungsvorrichtung kann hierzu beispielsweise an einer Konsole oder Oberfläche der Anschlagsvorrichtung angeordnet bzw. montiert sein, welche Konsole entlang der beiden Achsen im Betrieb der Werkstückbearbeitungsmaschine verstellt wird. Bei geeigneter Justierung bzw. Ausrichtung der Beleuchtungsvorrichtung kann dadurch in einfacher Art und Weise realisiert werden, dass im Betrieb während einer Verstellbewegung des Anschlagfingers entlang der beiden Verstellachsen, das erste Lichtbündel in den dem Anschlagfinger vorauseilenden Bereich gestrahlt ist. Im Falle einer Biegemaschine, insbesondere einer Abkantpresse, ist die Bewegungskopplung der Beleuchtungsvorrichtung entlang zweier Verstellachsen besonders zweckmäßig, da auf diese Weise besonders sicherheitsrelevante bzw. kollisionsgefährdete, automatisierte Verstellbewegungen eines Anschlagfingers überwacht werden können. Dies gilt insbesondere sowohl für Verstellbewegungen entlang einer sogenannten X-Achse, also horizontal entlang einer in Richtung einer Werkstückzufuhrseite bzw. einer Biegeebene weisenden Verstellachse, als auch entlang einer sogenannten Z-Achse, also entlang eine horizontalen, parallel zu einer Arbeitsfläche bzw. einem Tischbalken einer Abkantpresse verlaufende Verstellachse der Werkstückbearbeitungsmaschine.

Im Grunde kann auch vorgesehen sein, dass eine Beleuchtungsvorrichtung direkt an einem Anschlagfinger angeordnet bzw. befestigt ist, sodass die Beleuchtungsvorrichtung bei jeder Verstellbewegung des Anschlagfingers mit dem Anschlagfinger bewegungsgekoppelt mitverstellt wird. Die Beleuchtungsvorrichtung kann in solchen Fällen zum Beispiel mehrere Lichtquellen aufweisen, welche jeweils ein Lichtbündel in den jeweils dem Anschlagfinger vorauseilenden Bereich strahlen. Dadurch kann jede Verstellbewegung bzw. jede Verstellrichtung eines Anschlagfingers auf Hindernisse überwacht werden.

Es kann aber auch zweckmäßig sein, dass zur Ausrichtung des ersten Lichtbündels in den dem Anschlagfinger vorauseilenden Bereich eine optische Spiegelfläche, insbesondere eine flache Spiegelfläche angeordnet ist.

Hierdurch kann die Beleuchtungsvorrichtung in einfacher Art und Weise zum Beispiel an einer Oberfläche an der Anschlagsvorrichtung werden. Das erste Lichtbündel kann im Betrieb der Werkstückbearbeitungsmaschine über die Spiegelfläche in den dem Anschlagfinger vorauseilenden Bereich umgelenkt werden. Die Dimensionen der optischen Spiegelfläche können hierbei groß genug gewählt werden, um in Abhängigkeit von der Anordnung der Beleuchtungsvorrichtung, ein Einstrahlen des ersten Lichtbündels in den gesamten zu überwachenden Bereich bzw. zumindest in einen sicherheitsrelevanten Bereich der Werkstückbearbeitungsmaschine gewährleisten zu können.

Bei einer bevorzugten Ausgestaltungsvariante der Werkstückbearbeitungsmaschine kann vorgesehen sein, dass die Beleuchtungsvorrichtung einen Linienlaser umfasst, welcher zur Abstrahlung eines zumindest weitestgehend parallelen, ersten Lichtbündels, dessen Strahlengang in einer ersten, ebenen Lichtfläche liegt, in den dem Anschlagfinger vorauseilenden Bereich, ausgebildet ist.

Hierdurch kann eine, zumindest vorwiegend monochromatische Lichtquelle mit hoher Lichtintensität zur Erzeugung des ersten Lichtbündels bereitgestellt werden, sodass die Erfassungsgenauigkeit einer ersten Lichtabbildung im Betrieb der Werkstückbearbeitungsmaschine gesteigert werden kann. Das erste Lichtbündel kann bei dieser Ausführungsform als ebene Lichtfläche, also in einer Ebene abgestrahlt werden, wodurch ein räumlich begrenztes, erstes Lichtbündel in den dem Anschlagfinger vorauseilenden Bereich gestrahlt werden kann.

Außerdem kann es zweckmäßig sein, dass der Linienlaser derart angeordnet ist, dass im Betrieb der Werkstückbearbeitungsmaschine eine senkrecht zum Strahlengang bzw. zur Strahlungsrichtung des ersten Lichtbündels verlaufende Lichtbündelquerachse der ersten Lichtfläche zumindest weitestgehend parallel zu einer Anlegefläche des Anschlagfingers ausgerichtet ist.

Im Betrieb der Werkstückbearbeitungsmaschine kann hierdurch das erste Lichtbündel primär in Richtung der Verstellbewegung des Anschlagfingers räumlich begrenzt werden. Dennoch kann ein Hindernis in Verstellrichtung sicher durch Erfassen der ersten Lichtabbildung auf einer Oberfläche des Hindernisses bzw. einer Objektfläche sicher und rasch erfasst werden.

Hierbei kann auch vorgesehen sein, dass der Linienlaser derart angeordnet ist, dass im Betrieb der Werkstückbearbeitungsmaschine eine parallel zu der Lichtbündelquerachse verlaufende Breitenerstreckung der ersten Lichtfläche im Bereich des Anschlagfingers größer ist als eine sich zwischen zwei Seitenrändern erstreckende Breite des Anschlagfingers.

Durch einen derart angeordneten bzw. ausgerichteten Linienlaser können im Betrieb der Werkstückbearbeitungsmaschine auch Hindernisse seitlich bezüglich der Verstellrichtung des Anschlagfingers mittels der wenigstens einen Erfassungsvorrichtung erfasst werden. Außerdem können auch Hindernisse bzw. Objekte erfasst werden, welche im Falle einer Verstellbewegung des Anschlagfingers entlang einer parallel zur Lichtbündelquerachse verlaufenden Verstellachse in Verstellrichtung auftauchen. In diesen Verstellrichtungen kann daher bei einem derart ausgestalteten, ersten Lichtbündel eine Einstrahlung weiterer Lichtbündel in den jeweils in Verstellrichtung vorauseilenden Bereich erübrigt werden, da ein derartiges, erstes Lichtbündel auch in diese Verstellrichtungen in den dem Anschlagfinger vorauseilenden Bereich gestrahlt wird.

Bei einer bevorzugten Ausgestaltungsvariante der Werkstückbearbeitungsmaschine kann vorgesehen sein, dass der Linienlaser zur Projektion eines parallel zu einer Anlegefläche des Anschlagfingers verlaufenden, zweiten Lichtstreifens auf die Oberfläche des Anschlagfingers ausgebildet ist.

Dadurch kann im Betrieb der Maschine mit einem bewegungsgekoppelten Linienlaser ein permanent während einer Verstellbewegung auf der Oberfläche des Anschlagfingers erfassbarer Lichtstreifen erzeugt werden. Diese Ausgestaltungsvariante ist vor allem deshalb vorteilhaft, da eine sicherheitsrelevante Maßnahme zur Funktionsüberprüfung der Beleuchtungsvorrichtung und/oder der wenigstens einen optischen Erfassungsvorrichtung bereitgestellt werden kann.

In weiterer Folge kann auch vorgesehen sein, dass der Linienlaser zur Projektion eines parallel zum zweiten Lichtstreifen verlaufenden bzw. ausgerichteten, dritter Lichtstreifens beabstandet zum zweiten Lichtstreifen auf die Oberfläche des Anschlagfingers ausgebildet ist.

Der Linienlaser kann zur Erzeugung der mehreren Lichbündel bzw. Lichtstreifen beispielsweise diffraktive optische Elemente und sogenannte Powell-Linsen umfassen.

Vorteilhaft kann außerdem eine Ausgestaltung der Werkstückbearbeitungsmaschine sein, bei welcher die wenigstens eine, optische Erfassungsvorrichtung eine ortsfeste, bilderfassende Kamera, insbesondere eine CCD-Kamera umfasst.

Im Betrieb der Werkstückbearbeitungsmaschine kann mittels einer ortsfesten, bilderfassenden Kamera die Position eines permanent auf die Oberfläche eines Anschlagfingers projizierten, zweiten Lichtstreifens, und/oder eines dritten Lichtstreifens grundsätzlich im Blickfeld bzw. im Überwachungsbereich der jeweiligen, bilderfassenden Kamera bestimmt werden, da die Anbringungs- und Ausrichtungskoordinaten einer solchen ortsfest angeordneten, bilderfassenden Kamera bekannt sind. Auf diese Weise kann bei mit dem Anschlagfinger bewegungsgekoppelten Verstellbewegungen der Beleuchtungsvorrichtung auch die Position des Anschlagfingers ermittelt werden, wobei die Laserlinien bzw. der zweite und/oder der dritte Lichtstreifen auf der Oberfläche des Anschlagfingers als Referenzstreifen herangezogen werden können.

Im Falle einer Biegemaschine, insbesondere einer Abkantpresse, kann beispielsweise im Betrieb die Position des zweiten und/oder dritten Lichtstreifens entlang der sogenannten Z-Achse, also entlang einer horizontalen, parallel zu einer Arbeitsfläche bzw. einem Tischbalken einer Abkantpresse verlaufende Verstellachse für den Anschlagfinger, bestimmt werden. Im Falle bei entlang der Z-Achse mit dem Anschlagfinger bewegungsgekoppelter Anordnung der Beleuchtungsvorrichtung kann so auch die Position des Anschlagfingers entlang der Z-Achse bestimmt werden.

Die permanent sichtbaren, je nach in einem scheinbaren Normalabstand voneinander projizierten Referenzstreifen bzw. die zweite und die dritte Laser- bzw. Lichtlinie, können aber auch zur bildlichen Verfolgung von Verstellbewegungen des Anschlagfingers in sogenannter X-Richtung, also horizontal entlang einer in Richtung einer Werkstückzufuhrseite bzw. einer Biegeebene weisenden Verstellachse verwendet werden. Beispielsweise kann im Betrieb einer Abkantpresse vorgesehen sein, dass aus einem bildlich erfassten, scheinbaren Normalabstand zwischen dem zweiten Lichtstreifen und dem dritten Lichtstreifen, ein Abstand einer werkstückzufuhrseitigen Randbegrenzung zu der Kamera und/oder einer beliebigen Referenzposition im Maschinenkoordinatensystem, rechnerisch ermittelt wird.

Des Weiteren kann eine Ausgestaltungsvariante der Werkstückbearbeitungsmaschine vorteilhaft sein, bei welcher sich die Spiegelfläche über die gesamte Länge eines an der Werkstückbearbeitungsmaschine ausgebildeten Tischbalkens, erstreckt.

Hierdurch kann eine Werkstückbearbeitungsmaschine bereitgestellt werden, bei welcher Verstellbewegungen eines Anschlagfingers über die gesamte Arbeitsfläche der Maschine überwacht bzw. verfolgt werden können.

Zweckmäßig kann auch eine Ausführungsform sein, bei welcher die Beleuchtungsvorrichtung entlang einer senkrecht zu einer Aufstandsfläche ausgerichteten, vertikalen Verstellachse mit dem Anschlagfinger nicht bewegungsgekoppelt angeordnet ist.

Derartige Vertikalverstellbewegungen eines Anschlagfingers erfolgen üblicherweise lediglich über sehr kurze Strecken, im Falle von Abkantpressen zum Beispiel entlang der sogenannten R-Achse. Des Weiteren werden Vertikalverstellungen eines Anschlagfingers üblicherweise in einem in sicherheitstechnischer Hinsicht nicht besonders relevanten Bereich einer Maschine ausgeführt, weshalb eine Überwachung in solchen Fällen vorteilhafterweise erübrigt werden kann.

Schließlich kann es zweckmäßig sein, wenn zumindest eine horizontal verlaufende, angetriebene Verstellachse zum automatisiert gesteuerten Verstellen des zumindest einen Anschlagfingers in Richtung einer Werkstückzufuhrseite, in eine Anschlagposition vorgesehen ist. Dadurch ist eine einfach ausgestaltete, lineare Verstellachse zur Überführung eines Anschlagfingers in die Anschlagposition bereitgestellt, welche Verfahr- bzw. Verstellachse hinsichtlich Hindernissen besonders einfach aber dennoch effizient überwacht werden kann.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel für eine Werkstückbearbeitungsmaschine mit Anschlagfingern, in perspektivischer Ansicht;
- Fig. 2: eine Seitenansicht einer Abkantpresse mit Darstellung des Verfahrens im Betrieb der Abkantpresse;
- Fig. 3: ausschnittsweise ein Überwachungsbereich für Verstellbewegungen eines Anschlagfingers, in Draufsicht von oben;
- Fig. 4: ausschnittsweise ein Überwachungsbereich für Verstellbewegungen eines Anschlagfingers, mit Lichtabbildungen auf einer Oberfläche des Anschlagfingers, in Draufsicht von oben.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Im Folgenden wird eine Werkstückbearbeitungsmaschine, sowie ein Verfahren zum Betreiben einer Werkstückbearbeitungsmaschine anhand einer Biegemaschine bzw. Abkantpresse als Ausführungsbeispiel im Detail beschrieben. An dieser Stelle sei vermerkt, dass die nachfolgenden Angaben selbstverständlich auch auf andere Typen von Werkstückbearbeitungsmaschinen, bei welchen automatisiert gesteuerte Anschlagvorrichtungen mit Anschlagfingern zur Positionierung von Werkstücken eingesetzt werden, übertragbar sind, bzw. dass ein Fachmann auf dem technischen Gebiet die der folgenden Beschreibung zu entnehmende Lehre auch auf andere Typen an Werkstückbearbeitungsmaschinen anwenden kann.

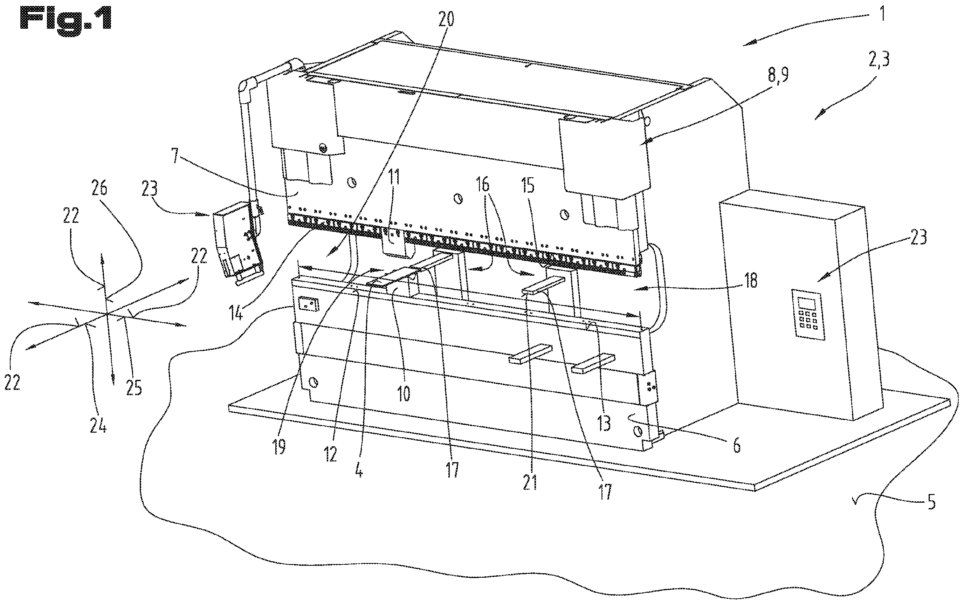

In der Fig. 1 ist als Beispiel für eine Werkstückbearbeitungsmaschine 1 eine Biegemaschine 2, insbesondere eine Abkantpresse 3 dargestellt. Die Werkstückbearbeitungsmaschine 1 bzw. Abkantpresse 3 ist zum Bearbeiten, insbesondere zum Biegen eines Werkstücks 4 vorgesehen. Die Abkantpresse 3 weist einen senkrecht zu einer Aufstandsfläche 5 ausgerichteten, feststehenden Tischbalken 6 auf. Zur Bearbeitung von Werkstücken 4 umfasst die Biegemaschine 2 bzw. die dargestellte Abkantpresse 3 einen Pressbalken 7, welcher relativ zum Tischbalken 6 in vertikaler Richtung mittels Antriebsmittel 8, beispielsweise Hydraulikzylinder 9, verstellbar bzw. verfahrbar ist.

Die Bearbeitung bzw. Umformung eines Werkstücks 4 wird bei der Abkantpresse 3 gemäß dem in der Fig. 1 dargestellten Ausführungsbeispiel mittels einem unteren Biegewerkzeug 10 und einem oberen Biegewerkzeug 11 bewerkstelligt. Hierbei kann ein unteres Biegewerkzeug 10, etwa ein sogenanntes Biegegesenk in einer unteren Werkzeugaufnahme 12 an einer Stirnfläche 13 des Tischbalkens 6 angeordnet sein. Ein oberes Biegewerkzeug 11 bzw. ein sogenannter Biegestempel kann in einer oberen Werkzeugaufnahme 14 an einer Stirnfläche 15 des Pressbalkens 7 angeordnet sein.

Üblicherweise sind die Biegewerkzeuge 10, 11 hierbei auswechselbar in den Werkzeugaufnahmen angeordnet bzw. gehalten, sodass für eine jeweilige Bearbeitung bzw. Umformung eines Werkstücks 4 jeweils geeignete Biegewerkzeuge 10, 11 gewählt bzw. verwendet werden können. Selbstverständlich ist es auch möglich, dass jeweils mehrere untere Biegewerkzeuge 10 und obere Biegewerkzeuge 11 im Betrieb der Abkantpresse 3 in den Werkzeugaufnahmen angeordnet sind, zum Beispiel um in aufeinanderfolgenden Umform- bzw. Biegeoperationen an einem Werkstück 4 unterschiedliche Biegevorgänge vornehmen zu können. Aus Gründen der Übersichtlichkeit sind in dem Ausführungsbeispiel gemäß der Fig. 1 jeweils nur ein unteres Biegewerkzeug 10 und ein oberes Biegewerkzeug 11 dargestellt.

Bei der in der Fig. 1 als Ausführungsbeispiel dargestellten Abkantpresse 3, ist des Weiteren zumindest eine automatisiert gesteuerte Anschlagvorrichtung 16 mit zumindest einem Anschlagfinger 17 dargestellt. Bei dem dargestellten Ausführungsbeispiel sind beispielshaft zwei Anschlagvorrichtungen 16 mit je einem Anschlagfinger 17 dargestellt, wobei es sich von selbst versteht, dass eine Werkstückbearbeitungsmaschine 1 auch nur einen Anschlagfinger 17 bzw. eine Anschlagvorrichtung 16, oder aber mehr als zwei Anschlagfinger 17 bzw. mehr als zwei Anschlagvorrichtungen 16 aufweisen kann.

Die beiden in der Fig. 1 dargestellten Anschlagvorrichtungen 16 bzw. Anschlagfinge 17 sind in einem Pressenraum 18 an einer Rückseite des Tischbalkens 6 der als Ausführungsbeispiel dargestellten Biegemaschine 2 bzw. Abkantpresse 3 angeordnet. Der oder die Anschlagfinger 17 können jeweils in eine zum Positionieren eines Werkstücks 4 vorgesehene Anschlagposition 19 verstellt bzw. verfahren werden. Wenn ein Anschlagfinger 17 in eine Anschlagposition 19 verstellt ist, kann sodann ein zu bearbeitendes Werkstück 4 von einer vom Pressenraum wegweisenden Vorderseite bzw. einer Werkstückzufuhrseite 20 der Werkstückbearbeitungsmaschine 1, an einer Anlegefläche 21 eines Anschlagfingers 17 angelegt, und somit möglichst exakt definiert zwischen den beiden Biegewerkzeugen 10, 11 zur Bearbeitung bzw. zur Umformung durch Biegen positioniert werden. Die in der Fig. 1 beispielhaft dargestellten Anschlagfinger 17 weisen lediglich eine Anlegefläche 21 auf. Grundsätzlich können Ausführungsvarianten von Anschlagfingern 17 auch mehr als eine Anlegefläche 21, sowie zusätzlich Auflageflächen für Werkstücke 4 umfassen.

Die in der Fig. 1 dargestellten Anschlagvorrichtungen 16 bzw. die Anschlagfinger 17 werden üblicherweise mittels Antriebsanordnungen (in der Fig. 1 nicht dargestellt), umfassend zum Beispiel Führungsbahnen, sowie Aktuatoren wie etwa Elektromotoren, insbesondere Servomotoren automatisiert gesteuert entlang jeweils angetriebener Verstellachsen 22 verstellt bzw. verfahren. Hierbei wird der zumindest eine Anschlagfinger 17 entlang zumindest einer angetriebenen Verfahr- bzw. Verstellachse 22 in eine zum Positionieren bzw. Anlegen eines Werkstücks 4 vorgesehene Anschlagposition 19 verstellt, wie dies anhand des in der Fig. 1 linkerhand dargestellten Anschlagfingers 17 veranschaulicht ist.

Zur Steuerung der Verfahr- bzw. Verstellbewegungen einer Anschlagvorrichtung 16 bzw. eines Anschlagfingers 17 entlang der zumindest einen Verstellachse 22, kann eine Steuerungsvorrichtung 23 vorgesehen sein. Wie in der Fig. 1 angedeutet ist, kann die Steuerungsvorrichtung 23 mehrere Komponenten aufweisen, beispielsweise mehrere Prozessoren bzw. Rechnerkomponenten, Eingabemittel zur Eingabe von Steuerungsbefehlen, Ausgabemittel zur Anzeige von Informationen, etc.. Des Weiteren ist es auch möglich, dass die Steuerungsvorrichtung 23 mit weiteren Steuerungskomponenten verbunden ist, beispielsweise mit mobilen Ein- und Ausgabemitteln über ein Netzwerk, oder über das Internet. Grundsätzlich kann die Art und Ausgestaltung bzw. die elektronische und datentechnische Architektur der Steuerungsvorrichtung 23 beliebig von einem Fachmann auf dem Gebiet vorgenommen werden. Die Steuerungsvorrichtung 23 kann bevorzugt durch eine CNC-Steuerung gebildet sein, welche die Werkstückbearbeitungsmaschine 1 bzw. die beispielhaft dargestellte Abkantpresse 3 und deren Komponenten, insbesondere Antriebsorgane der Anschlagvorrichtungen 16 mit Energie und Steuerungssignalen versorgt bzw. beaufschlagt.

Bei Biegemaschinen 2 bzw. Abkantpressen 3 kann grundsätzlich eine Verstellung bzw. ein automatisiertes Verfahren von Anschlagfingern entlang zumindest einer Verfahr- bzw. Verstellachse 22 bzw. CNC-Achse vorgesehen sein. Üblicherweise ist ein Anschlagfinger zumindest entlang zweier horizontaler CNC-Achsen, nämlich entlang einer sogenannten X-Achsausrichtung und einer sogenannten Z-Achsausrichtung verstellbar ausgeführt. In vielen Fällen kann auch ein Verstellen eines Anschlagfingers 17 entlang einer vertikalen Achse, nämlich entlang einer sogenannten R-Achsausrichtung vorgesehen sein. Die Ausrichtung dieser, bei einer Abkantpresse 3 üblichen Verstellachsen 22 ist in der perspektivischen Darstellung der Fig. 1 anhand der eingefügten X-Achsausrichtung 24, Z-Achsausrichtung 25 und R-Achsausrichtungen 26 bzw. Koordinatenachsen veranschaulicht. Dabei ist zumindest eine horizontal verlaufende, angetriebene Verstellachse 22 zum automatisiert gesteuerten Verstellen des zumindest einen Anschlagfingers 17 in Richtung einer Werkstückzufuhrseite 20, in eine Anschlagposition 19 vorgesehen.

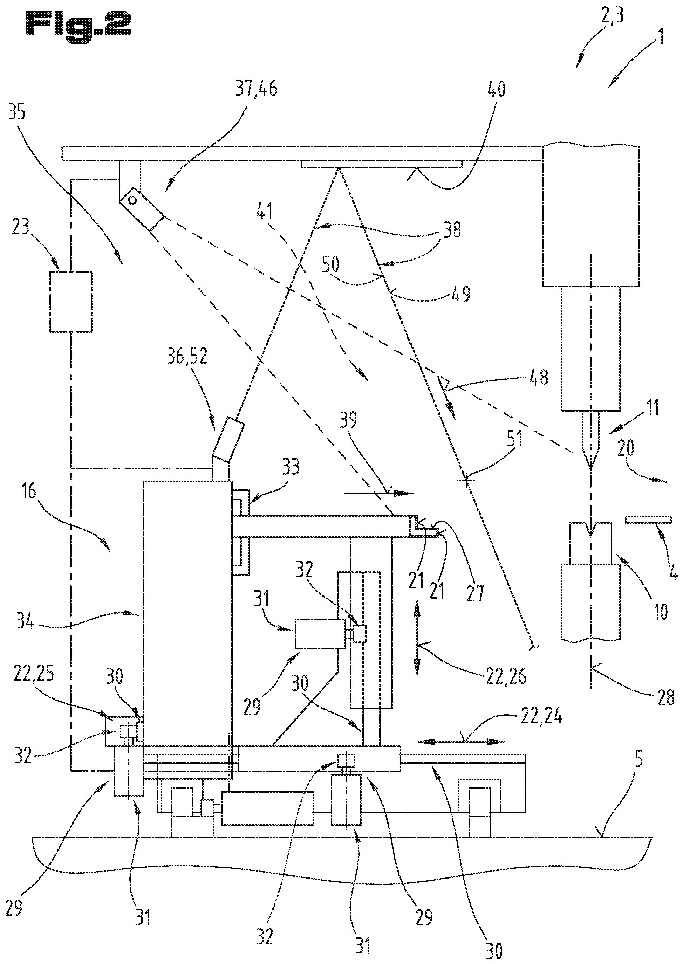

In der Fig. 2 ist ein Ausführungsbeispiel einer Abkantpresse 3 in Seitenansicht dargestellt. Es werden für gleiche Teile gleiche Bezugszeichen bzw. Bauteilbezeichnungen wie in der vorangegangenen Fig. 1 verwendet. Um unnötige Wiederholungen zu vermeiden, wird auf die detaillierte Beschreibung in der vorangegangenen Fig. 1 hingewiesen bzw. Bezug genommen. In der Fig. 2 ist eine Anschlagvorrichtung 16 mit einem Anschlagfinger 17 dargestellt. Bei diesem Ausführungsbeispiel weist der Anschlagfinger 17 zwei Anlegeflächen 21 und eine Auflagefläche 27 für ein jeweiliges Werkstück 4 auf. Die Anschlagvorrichtung 16 bzw. der Anschlagfinger 17 können mittels Antriebsanordnungen 29 entlang der Verstellachsen 22 in X-Achsausrichtung 24, Z-Achsausrichtung 25, und R-Achsausrichtung 26 verstellt werden.

Der dargestellte Anschlagfinger 17 bzw. die Anschlagvorrichtung 16 kann einerseits entlang der horizontalen, in X-Achsausrichtung 24 senkrecht auf eine Biegeebene 28 bzw. Arbeitsebene der Biegewerkzeuge 10, 11 der Abkantpresse 3 ausgerichteten Verstellachse 22, verstellt werden. Hierzu kann die Anschlagvorrichtung 16 an einer Führungsbahn 30 beweglich gelagert sein. Als Aktuator für die Verstellung der Anschlagvorrichtung 16 und des Anschlagfingers 17 kann beispielsweise ein Elektromotor, insbesondere ein Servomotor 31 vorgesehen sein, welcher von der Steuerungsvorrichtung 23, siehe Fig. 1 angesteuert werden kann. Die Drehbewegungen des Servomotors 31 können beispielsweise mittels eines Zahnritzels 32 oder einer anderen Übertragungsvorrichtung, auf eine Zahnstangenanordnung oder andere Bewegungsübertragungsvorrichtung der Anschlagvorrichtung 16 übertragen werden, wodurch die Anschlagvorrichtung 16 und der Anschlagfinger 17 entlang der in X-Achsausrichtung 24 ausgerichteten Verstellachse 22 positioniert werden kann.

Zur Verstellung der Anschlagvorrichtung 16 bzw. des Anschlagfingers 17 entlang der in Z-Achsausrichtung 25 ausgerichteten Verstellachse 22 kann grundsätzlich eine analoge Antriebsanordnung 29, umfassend eine weitere Führungsbahn 30, einen weiteren Servomotor 31, ein weiteres Zahnritzel 32 und eine weitere Zahnstangenanordnung oder andere korrespondierende Bewegungsübetragungsvorrichtungen vorgesehen sein, wie dies in dem Ausführungsbeispiel gemäß der Fig. 2 veranschaulicht ist. Eine Verstellbewegung der Anschlagvorrichtung 16 und des Anschlagfingers 17 entlang der in Z-Achsausrichtung 25 angeordneten Verstellachse 22 entspricht in der Seitenansicht der Abkantpresse 3 gemäß der Fig. 2 einer horizontalen Verstellbewegung senkrecht auf die Zeichenebene der technischen Zeichnung gemäß Fig. 2.

Des Weiteren kann eine weitere, entsprechende Antriebsanordnung 29 mit Führungsbahnen 30, Servomotor 31 Bewegungsübetragungsvorrichtungen auch zur Verstellung eines Anschlagfingers 17 und/oder einer Anschlagvorrichtung 16 entlang einer vertikalen, parallel zur Biegeebene in R-Achsausrichtung 26 verlaufenden Verstellachse 22 vorgesehen sein. Bei dem Ausführungsbeispiel einer Abkantpresse 3 gemäß der Fig. 2 ist eine zusätzliche Führungsbahn 33 an einer Konsole 34 der Anschlagvorrichtung 16 vorgesehen, sodass der dargestellte Anschlagfinger 17 an der relativ zu der Konsole 34 in R-Achsausrichtung 26 verstellt werden kann. In diesem Falle wird die Konsole 34 der Anschlagvorrichtung 16 entlang der in X-Achsausrichtung 24 und der in Z-Achsausrichtung 25 ausgerichteten Verstellachsen 22 verstellt, nicht jedoch entlang der in R-Achsausrichtung verlaufenden Verstellachse 22. Bei dem dargestellten Ausführungsbeispiel wird in R-Achsausrichtung 26 somit lediglich der Anschlagfinger 17, und nicht die gesamte Anschlagvorrichtung 16, insbesondere nicht die Konsole 34 verstellt.

Grundsätzlich besteht bei automatisiert gesteuerten Verfahr- bzw. Verstellbewegungen der Anschlagvorrichtung 16 bzw. des Anschlagfingers 17 eine Gefahr von Kollisionen des Anschlagfingers 17 mit anderen Objekten, beispielsweise einer Hand einer Bedienperson. Daher ist als wesentlicher Bestandteil der Werkstückbearbeitungsmaschine 1 eine mit der Steuerungsvorrichtung 23 signalverbundene Überwachungsvorrichtung 35 vorgesehen, welche eine Beleuchtungsvorrichtung 36 und wenigstens eine optische Erfassungsvorrichtung 37 umfasst.

Die Beleuchtungsvorrichtung 36 ist hierbei mit dem Anschlagfinger 17 bzw. der Anschlagvorrichtung 16 bewegungsgekoppelt angeordnet bzw. angebracht, und ist im Betrieb der Werkstückbearbeitungsmaschine 1 während einer automatisiert gesteuerten Verstellbewegung des zumindest einen Anschlagfingers 17, zur Abstrahlung eines ersten Lichtbündels 38 in einen dem Anschlagfinger 17 in Verstellrichtung 39 vorauseilenden Bereich ausgebildet bzw. angeordnet und ausgerichtet. Somit kann während einer automatisiert gesteuerten Verstellbewegung des Anschlagfingers 17 bzw. der Anschlagvorrichtung 16 entlang der zumindest einen Verstellachse 22, mittels der mit dem Anschlagfinger 17 entlang der zumindest einen Verstellachse 22 bewegungsgekoppelten Beleuchtungsvorrichtung 36, ein erstes Lichtbündel 38 in einen dem Anschlagfinger 17 in Verstellrichtung 39 vorauseilenden Bereich gestrahlt werden. Das erste Lichtbündel 38 ist in der Fig. 2 und den folgenden Figuren jeweils mit strichlierten Linien veranschaulicht. Dies ist nicht so zu verstehen, dass etwa der Strahlengang des ersten Lichtbündels 38 unterbrochen wäre. Vielmehr kann die Beleuchtungsvorrichtung 36 zur Abstrahlung eines kontinuierlichen, ersten Lichtbündels 38 ausgebildet sein. Grundsätzlich ist natürlich auch eine Abstrahlung eines gepulsten, ersten Lichtbündels 38 möglich.

Als Beispiel für eine Verstellrichtung ist in dem Ausführungsbeispiel gemäß Fig. 2 eine horizontale Verstellbewegung des Anschlagfingers 17 entlang der X-Achsausrichtung 24 senkrecht auf die Biegeebene 28 in Richtung der Werkstückzufuhrseite 20 anhand des Pfeiles 39 veranschaulicht. Diese dargestellte Verstellrichtung 39 eines Anschlagfingers 17 birgt ein besonders hohes Gefährdungspotential für Kollisionen, da im werkstückzufuhrseitigen Bereich der dargestellten Abkantpresse 3 oftmals Bedienpersonen arbeiten, beispielsweise mit den zu bearbeitenden Werkstücken 4 hantieren. Daher ist es besonders wesentlich, dass das erste Lichtbündel 38 während einer entlang einer horizontal verlaufenden Verstellachse 22 in Richtung einer Werkstückzufuhrseite 20 ausgeführten Verstellbewegung des Anschlagfingers 17 in eine Anschlagposition 19, in einen dem Anschlagfinger 17 vorauseilenden Bereich gestrahlt wird. Die in der Fig. 2 dargestellte Verstellrichtung 39 entspricht einer Verstellung des Anschlagfingers 17 entlang der in X-Achsausrichtung 24 verlaufenden Verstellachse 22.

Wie in dem Ausführungsbeispiel gemäß der Fig. 2 dargestellt ist, kann die Beleuchtungsvorrichtung 36 beispielsweise an der Konsole 34 der Anschlagvorrichtung 16 angeordnet sein, sodass die Beleuchtungsvorrichtung 36 bei Verstellbewegungen entlang der in X-Achsausrichtung 24 und in Z-Achsausrichtung 25 angeordneten Verstellachsen 22 gemeinsam mit dem Anschlagfinger 17 bzw. der Anschlagvorrichtung 16 verstellt werden kann, also die Beleuchtungsvorrichtung 36 mit dem Anschlagfinger 17 bewegungsgekoppelt ist.

Grundsätzlich kann vorgesehen sein, dass die Beleuchtungsvorrichtung 36 entlang mehr als einer Verstellachse 22, zum Beispiel wie bereits gezeigt wenigstens entlang zwei Verstellachsen 22 bewegungsgekoppelt mit einem Anschlagfinger 17 verstellt bzw. verfahren wird. Bei dem Ausführungsbeispiel für eine Abkantpresse 3 gemäß der Fig. 2, ist die Beleuchtungsvorrichtung 36 wenigstens entlang zweier angetriebener Verstellachsen 22 mit dem Anschlagfinger 17 bewegungsgekoppelt verstellbar angeordnet, nämlich in X-Achsausrichtung 24 und in Z-Achsausrichtung 25. Die Beleuchtungsvorrichtung 36 ist an der Konsole 34 der Anschlagvorrichtung 16 angeordnet, welche Konsole 34 jeweils entlang der in X-Achsausrichtung 24 und in Z-Achsausrichtung 25 verlaufenden Verstellachsen 22 gemeinsam mit dem Anschlagfinger 17 bzw. zur Verstellung des Anschlagfingers 17 verstellbar ist.

Grundsätzlich ist es auch denkbar, dass eine Beleuchtungsvorrichtung 36 direkt an einem Anschlagfinger 17 angeordnet bzw. befestigt ist. In diesem Falle würde natürlich die Beleuchtungsvorrichtung 36 bei jeder Verstellbewegung des Anschlagfingers 17 mit dem Anschlagfinger 17 bewegungsgekoppelt mitverstellt werden. Die Beleuchtungsvorrichtung 36 kann in solchen Fällen zum Beispiel mehrere Lichtquellen aufweisen, welche jeweils ein Lichtbündel in den jeweils dem Anschlagfinger 17 vorauseilenden Bereich strahlen.

Es kann aber auch vorgesehen sein, dass die Beleuchtungsvorrichtung 36 entlang einer senkrecht zu einer Aufstandsfläche 5 ausgerichteten, vertikalen Verstellachse 22 mit dem Anschlagfinger 17 nicht bewegungsgekoppelt angeordnet ist, das heißt in vertikaler Richtung nicht bewegungsgekoppelt mit dem Anschlagfinger 17 verstellt wird, wie dies auch anhand des in der Fig. 2 dargestellten Ausführungsbeispiels für eine Werkstückbearbeitungsmaschine 1 veranschaulicht ist. Bei der dargestellten Abkantpresse 3 wird der Anschlagfinger 17 unabhängig von der Konsole 34 bzw. relativ zur Konsole 34 entlang der in vertikaler R-Achsausrichtung 26 verlaufenden Verstellachse 22 verstellt. Vertikalverstellbewegungen entlang der in R-Achsausrichtung 26 verlaufenden Verstellachse 22 erfolgen üblicherweise lediglich über sehr kurze Strecken, weshalb eine Überwachung dieser vertikalen Verstellbewegungen des Anschlagfingers 17 im Prinzip erübrigt werden kann.

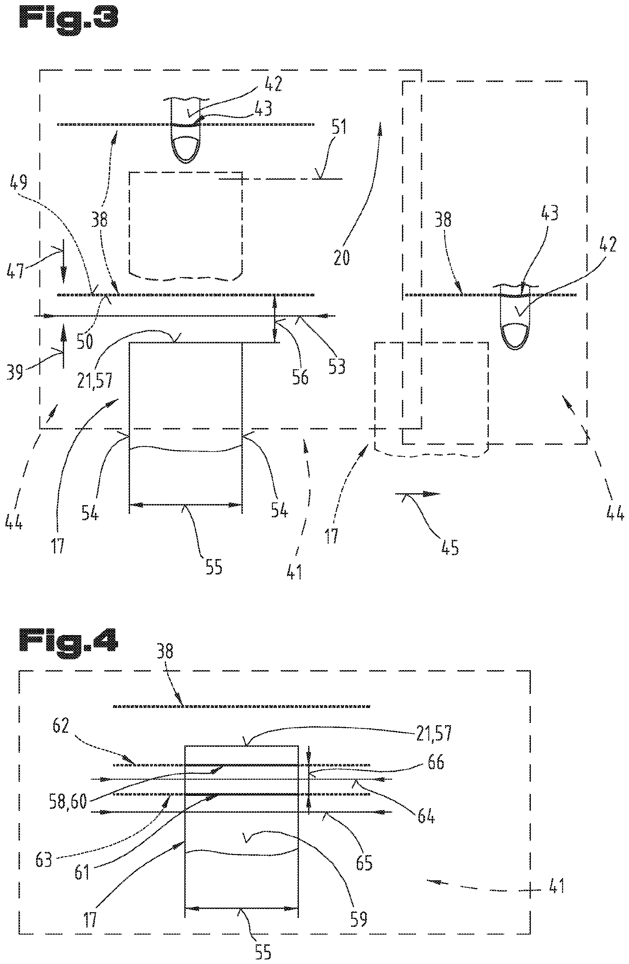

Zur Einstrahlung des ersten Lichtbündels 38 in den dem Anschlagfinger 17 in Verstellrichtung 39 vorauseilenden Bereich kann eine Anordnung zweckmäßig sein, bei welcher zur Ausrichtung des ersten Lichtbündels eine optische Spiegelfläche 40 angeordnet ist, wie dies auch in der Fig. 2 dargestellt ist. Im Besonderen kann eine flache Spiegelfläche 40 ausgebildet sein, mittels welcher das erste Lichtbündel 38 in den dem Anschlagfinger 17 in Verstellrichtung 39 vorauseilenden Bereich gerichtet wird. Die Abmessungen der Spiegelfläche 40 müssen hierbei groß genug gewählt werden, um das erste Lichtbündel via die Spiegelfläche 40 möglichst über einen gesamten, möglichen Verstellbewegungsbereich des Anschlagfingers 17 in einen jeweils dem Anschlagfinger 17 vorauseilenden Bereich einstrahlen zu können. Hierbei kann vorgesehen sein, dass sich die Spiegelfläche 40 über die gesamte Länge eines an der Werkstückbearbeitungsmaschine 1 ausgebildeten Tischbalkens 6, siehe Fig. 1, erstreckt. Bei dem in der Fig. 2 dargestellten Ausführungsbeispiel kann das erstes Lichtbündel 38 grundsätzlich sowohl bei Verstellbewegungen des Anschlagfingers 17 entlang der X-Achsausrichtung 24 in Richtung der Werkstückzufuhrseite 20, als auch bei Verstellbewegungen jeweils entlang der Z-Achsausrichtung 25 jeweils in einen dem Anschlagfinger 17 vorauseilenden Bereich gestrahlt werden, wie dies anhand von der Fig. 3 noch erläutert wird.

Wie aus der Fig. 2 ersichtlich ist, ist die wenigstens eine Erfassungsvorrichtung 37 ortsfest zur Überwachung eines Überwachungsbereiches 41 angeordnet, und wird im Betrieb der Werkstückbearbeitungsmaschine mittels der wenigstens einen, optischen Erfassungsvorrichtung 37 ein Überwachungsbereich 41 für Verstellbewegungen des Anschlagfingers 17 überwacht. Hierbei ist die wenigstens eine Erfassungsvorrichtung 37 zur Erfassung einer durch das erste Lichtbündel 38 beim Auftreffen auf eine Objektfläche 42 hervorgerufenen, ersten Lichtabbildung 43, siehe Fig. 3 ausgebildet. Die wenigstens eine optische Erfassungsvorrichtung 37 kann grundsätzlich zur Einstellung des Überwachungsbereiches 41 justierbar angeordnet sein.

In der Fig. 3 wird wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen. Die Fig. 3 zeigt ausschnittsweise einen durch die wenigstens eine Erfassungsvorrichtung 37 überwachten Überwachungsbereich 41, in Draufsicht von oben. Das erste Lichtbündel 38 ist in der Fig. 3 zur besseren Ersichtlichkeit nur in der Abbildungsebene der ersten Lichtabbildung 43 dargestellt. Das erste Lichtbündel 38 kann beispielsweise in einem Winkel in den dem Anschlagfinger 17 vorauseilenden Bereich eingestrahlt werden, wie dies am besten in der Fig. 2 ersichtlich ist.

Durch die wenigstens eine Erfassungsvorrichtung 37, siehe Fig. 2, wird ein Überwachungsbereich 41 überwacht, in welchem Verstellbewegungen eines Anschlagfingers 17 ausgeführt werden. Hierbei können natürlich auch mehrere optische Erfassungsvorrichtungen 37 zur Bildung eines Überwachungsbereiches 41 verwendet werden, wobei sich einzelne einer jeweiligen, optischen Erfassungsvorrichtung 37 zugeordnete Überwachungsbereiche 44 überlappen, und zu einem gesamten Überwachungsbereich 41 zur Überwachung von Verstellbewegungen des oder der Anschlagfinger(s) 17 ergänzen können, wie dies in der Fig. 3 veranschaulicht ist.

Durch mehrere, sich überlappende Überwachungsbereiche 44 können beispielsweise maschinenkonstruktionsbedingte messtechnische Lücken durch konstruktive Hindernisse, wie etwa Verstrebungen und Dergleichen, vermieden werden. In solchen Fällen können die überlappenden Überwachungsbereiche 44 der verschiedenen Erfassungsvorrichtungen 37 jeweils rechnerisch miteinander gekoppelt sein. Beispielsweise kann ein Anschlagfinger bei einem Übertritt von einem Überwachungsbereich 44 in einen benachbarten Überwachungsbereich 44 einer anderen Erfassungsvorrichtung 37, überwachungstechnisch quasi übergeben werden. Wichtig ist hierbei vor allem, dass alle sicherheitsrelevanten Bereiche der Werkstückmaschine durch den gesamten Überwachungsbereich 41 erfassbar sind.

In der Fig. 3 sind Verstellbewegungen eines Anschlagfingers 17 in zwei horizontale, senkrecht aufeinander ausgerichtete Verstellrichtungen 39, 45 veranschaulicht. Die Verstellbewegung des Anschlagfingers 17 in Verstellrichtung 39 kann beispielsweise entlang der X-Achsausrichtung 24, siehe Fig. 1 und 2, erfolgen. Die Verstellbewegung des Anschlagfingers 17 in Verstellrichtung 45 kann beispielsweise entlang der Z-Achsausrichtung 25, siehe Fig. 1 und 2, erfolgen.

Durch das dem Anschlagfinger 17 jeweils in Verstellrichtung 39, 45 vorauseilende, erste Lichtbündel 38 wird auf einer im Strahlengang des ersten Lichtbündels 38 während der Verstellbewegung des Anschlagfingers 17 auftauchenden Objektfläche 42, beispielsweise dem in der Fig. 3 dargestellten Finger einer Person, jeweils eine erste Lichtabbildung 43 abgebildet. Diese erste Lichtabbildung 43 kann mittels der wenigstens einen, optischen Erfassungsvorrichtung 37, siehe Fig. 2, erfasst werden. Die optische Erfassungsvorrichtung kann im Prinzip durch jedwede Erfassungsvorrichtung, welche zur Erfassung der ersten Lichtabbildung 43 ausgebildet bzw. geeignet ist, gebildet sein. Bevorzugt wird der Überwachungsbereich 41 mittels wenigstens einer ortsfesten, bilderfassenden Kamera 46 überwacht. Im Besonderen kann die wenigstens eine, optische Erfassungsvorrichtung 37 eine ortsfeste, bilderfassende Kamera 46, insbesondere eine CCD-Kamera umfassen. Eine bilderfassende Erfassungsvorrichtung 37 bzw. Kamera 46 ermöglicht insbesondere eine Positionsbestimmung von Lichtabbildungen im Überwachungsbereich 41. Die in der Fig. 3 dargestellte, erste Lichtabbildung 43 ist lediglich eine exemplarische Veranschaulichung. Die für eine bilderfassende Erfassungsvorrichtung 37 erkennbare bzw. erfassbare Form einer jeweiligen, ersten Lichtabbildung 43 hängt natürlich von einigen Faktoren ab, im Besonderen von der Form des Objektes im Strahlengang des ersten Lichtbündels 38, und dem jeweiligen Erfassungswinkel bzw. der Position der Erfassungsvorrichtung 37.

Wesentlich ist, dass bei einer Erfassung einer durch das erste Lichtbündel 38 auf einer Objektfläche 42 abgebildeten ersten Lichtabbildung 43, siehe Fig. 3, unverzüglich bzw. umgehend eine automatisiert gesteuerte Sicherheitsmaßnahme ausgelöst wird. Hierzu ist die mit der Überwachungsvorrichtung 35 bzw. mit der optischen Erfassungsvorrichtung 37 signalverbundene Steuerungsvorrichtung 23, siehe Fig. 2, zum unverzüglichen Auslösen wenigstens einer Sicherheitsmaßnahme bei aktiviertem, ersten Lichtbündel 38 und einer Erfassung der ersten Lichtabbildung 43, siehe Fig. 3, durch die wenigstens eine optische Erfassungsvorrichtung 37 während der Verstellbewegung des Anschlagfingers 17, ausgebildet.

Grundsätzlich kann zum Beispiel vorgesehen sein, dass die Steuerungsvorrichtung bei einer Erfassung der ersten Lichtabbildung 43 umgehend einen akustischen und/oder optischen Alarm auslöst. Die Steuerungsvorrichtung 23 ist, wie bereits beschrieben, sowohl mit der Beleuchtungsvorrichtung 36 und der wenigstens einen Erfassungsvorrichtung 37 der Überwachungsvorrichtung 35, als auch mit den Antriebsanordnungen 29 für die Verstellung eines Anschlagfingers 17, etwa deren Servomotoren 31, siehe Fig. 2, signalverbunden. Es kann vorgesehen sein, dass durch die Steuerungsvorrichtung 23 im Falle einer Erfassung der ersten Lichtabbildung 43 unverzüglich ein Stoppen einer Verstellbewegung eines Anschlagfingers 17 ausgelöst wird. Im Besonderen kann auch vorgesehen sein, dass als automatisiert gesteuerte Sicherheitsmaßnahme eine unverzügliche Rückstellbewegung 47 des Anschlagfingers 17 ausgelöst wird, wie dies in der Fig. 3 durch Pfeil 47 veranschaulicht ist.

Grundsätzlich kann aber auch vorgesehen sein, dass bei einem Stillstand des Anschlagfingers 17 keine automatisiert gesteuerte Sicherheitsmaßnahme ausgelöst wird, da hier kein erhöhtes Risikopotential hinsichtlich einer durch eine Verstellbewegung eines Anschlagfingers 17 bedingte Kollision besteht. Dies grundsätzlich unabhängig davon, ob die Beleuchtungsvorrichtung 36 zur Abstrahlung des ersten Lichtbündels 38 aktiviert oder deaktiviert ist.

Des Weiteren kann aber auch vorgesehen sein, dass die Steuerungsvorrichtung 23 das erste Lichtbündel 38 bei einem Stillstand des Anschlagfingers 17 deaktiviert. Beispielsweise kann es zweckmäßig sein, wenn das erste Lichtbündel 38 bei Erreichen einer steuerungstechnisch vorgegebenen Anschlagposition 19, siehe Fig. 1, umgehend deaktiviert wird. In diesem Zusammenhang kann wiederum vorgesehen sein, das erste Lichtbündel 38 bei einem automatisiert gesteuerten Start einer Verstellbewegung des Anschlagfingers 17 in eine Anschlagposition 19 umgehend aktiviert wird. Es kann aber auch sinnvoll sein, wenn das erste Lichtbündel 38 während einer Verstellbewegung in eine Anschlagposition 19, in einem steuerungstechnisch vorgebbaren Abstand von der jeweiligen Anschlagposition 19 während der Verstellbewegung bis zum Erreichen der jeweiligen Anschlagposition 19 deaktiviert wird. Durch diese Maßnahme kann ein ungewollte Auslösungen von Sicherheitsmaßnahmen hintangehalten werden, beispielsweise wenn bei einer Annäherung des Anschlagfingers 17 in die Anschlagposition 19 eine Maschinenkomponente, wie etwa das in der Fig. 2 dargestellte, untere Biegewerkzeug 10 in den Strahlengang des ersten Lichtbündels 38 und in den Überwachungsbereich 41 der Überwachungsvorrichtung 35 gelangt.

Im Prinzip kann das von der Beleuchtungsvorrichtung 36 abgestrahlte, erste Lichtbündel 38, siehe Fig. 2, beispielsweise durch einen Lichtkegel, Lichtzylinder oder eine andere Lichtbündelstruktur gebildet sein, durch welche Lichtbündelstruktur auf eine im Strahlengang befindlichen Objektfläche 42 als erste Lichtabbildung 43 zum Beispiel eine kreis- oder ellipsenförmige Fläche, oder eine kreis- oder ellipsenförmige Linie abgebildet werden kann. Grundsätzlich können zur Erzeugung des ersten Lichtbündels 38 beliebige geeignete, optische Elemente in Verbindung mit der Beleuchtungsvorrichtung 36 verwendet werden, solange sichergestellt wird, dass das erste Lichtbündel 38 in einen dem Anschlagfinger 17 während einer Verstellbewegung vorauseilenden Bereich gestrahlt werden kann. Dies möglichst ohne dass eine erste Lichtabbildung 43 auf einer Oberfläche der Maschine bzw. einer Maschinenkomponente erzeugt wird. Beispielsweise kann hierzu die in der Fig. 2 dargestellte Spiegelfläche 40 angeordnet sein, um den Strahlengang des ersten Lichtbündels 38 umzulenken.

Wesentlich ist hierbei, dass eine erste Lichtabbildung 43 auf einer Oberfläche bzw. Objektfläche 42 eines Hindernisses möglichst rasch und erkennungssicher durch die wenigstens eine optische Erfassungsvorrichtung 37 erkannt werden kann. Im Besonderen kann das von der Beleuchtungsvorrichtung 36 abgestrahlte Licht bzw. das erste Lichtbündel 38 monochromatisch sein. In diesem Zusammenhang kann die wenigstens eine optische Erfassungsvorrichtung 37 beispielsweise spezifisch zur sicheren Erkennung bzw. Erfassung des von der Beleuchtungsvorrichtung 36 abgestrahlten Lichtes bzw. ersten Lichtbündels 38 ausgebildet sein, insbesondere zur möglichst sicheren Erfassung von Licht mit der abgestrahlten Wellenlänge. Hierzu wären beispielsweise Farbsensoren bzw. Photodioden grundsätzlich geeignet, wobei zu beachten wäre, dass durch entsprechende Sensoren ein ausreichend dimensionierter Überwachungsbereich zur Überwachung der Verstellbewegungen für den Anschlagfinger 17 überwacht wird. Wie bereits beschrieben wird zur Überwachung bevorzugt eine bilderfassende Überwachungsvorrichtung 35 bzw. eine Kamera 46 eingesetzt bzw. verwendet.

Von Vorteil kann es sein, wenn das erste Lichtbündel 38 als zumindest weitestgehend paralleles Lichtbündel 38, dessen Strahlengang eine erste, ebene Lichtfläche 49 bildet, in den dem Anschlagfinger 17 vorauseilenden Bereich gestrahlt wird. Im Besonderen kann es zweckmäßig sein, dass eine quer zum Strahlengang 48 verlaufende Lichtbündelquerachse 51 der ersten Lichtfläche 49 zumindest weitestgehend parallel zu einer Anlegefläche 21 des Anschlagfingers 17 ausgerichtet ist. Ein derartiges, erstes Lichtbündel kann eine weitere, zumindest weitestgehend parallel zur ersten Lichtfläche verlaufende, Lichtfläche 50 bilden, durch welche Lichtflächen 49, 50 das erste Lichtbündel 38 begrenzt ist. Wie beschrieben, wird bevorzugt ein erstes Lichtbündel 38 in den dem Anschlagfinger 17 vorauseilenden Bereich eingestrahlt, dessen erste Lichtfläche 49 und weitere Lichtfläche 50 möglichst kleinen Normlabstand voneinander aufweisen, sodass das erste Lichtbündel 38 auf einer ebenen Oberfläche, insbesondere einer normal auf den Strahlengang 48 bzw. senkrecht zu dem Strahlengang 48 ausgerichteten, ebenen bzw. flachen Oberfläche, als eng begrenzter Lichtstreifen bzw. als Lichtlinie abgebildet wird. Der Begriff Strahlengang 48 bezeichnet hierbei auch die jeweilige Hauptstrahlungsrichtung bzw. Ausbreitungsrichtung der von der Beleuchtungsvorrichtung 36 ausgesandten Lichtbündel(s).

Zur Erzeugung bzw. Abstrahlung eines derartigen, ersten Lichtbündels 38 ist im Besonderen ein Linienlaser 52 geeignet. Daher kann es vorteilhaft sein, dass das erste Lichtbündel 38 mittels einer Beleuchtungsvorrichtung 36 umfassend einen Linienlaser 52 in den in den dem Anschlagfinger 17 in Verstellrichtung 39, 45 vorauseilenden Bereich gestrahlt wird, wie dies auch in der Fig. 2 dargestellt ist. Die Beleuchtungsvorrichtung 36 kann also einen Linienlaser 52 umfassen, welcher zur Abstrahlung eines zumindest weitestgehend parallelen, ersten Lichtbündels 38, dessen Strahlengang 48 in einer ersten, ebenen Lichtfläche 49 liegt, in den dem Anschlagfinger 17 vorauseilenden Bereich, ausgebildet ist. Der Linienlaser 52 kann hierbei derart angeordnet sein, dass im Betrieb der Werkstückbearbeitungsmaschine 1 eine quer zu dem Strahlengang 48 verlaufende Lichtbündelquerachse 51 der ersten Lichtfläche 49 zumindest weitestgehend parallel zu einer Anlegefläche 21 des Anschlagfingers 17 ausgerichtet ist, wie dies am besten durch Zusammenschau der Fig. 2 und der Fig. 3 ersichtlich ist.

Des Weiteren kann auch vorgesehen sein, dass der Linienlaser 52 derart angeordnet ist, dass im Betrieb der Werkstückbearbeitungsmaschine 1 eine parallel zu der Lichtbündelquerachse 51 verlaufende Breitenerstreckung 53 der ersten Lichtfläche 49 im Bereich des Anschlagfingers 17 größer ist als eine sich zwischen zwei Seitenrändern 54 erstreckende Breite 55 des Anschlagfingers 17, wie dies in der Fig. 3 dargestellt ist.

Grundsätzlich können je nach Verstellrichtung 39, 45 auch jeweils weitere, gegebenenfalls anders ausgerichtete, Lichtbündel in einem dem Anschlagfinger 17 jeweils vorauseilenden Bereich eingestrahlt werden. Hierzu kann die Beleuchtungsvorrichtung 36, zum Beispiel mehrere Lichtquellen zur Abstrahlung eines jeweiligen Lichtbündels 38 in einen jeweils in Verstellrichtung 39, 45 dem Anschlagfinger vorauseilenden Bereich aufweisen.

Bevorzugt wird ein erstes Lichtbündel 38 derart in den dem Anschlagfinger 17 in Verstellrichtung 39 vorauseilenden Bereich gestrahlt, dass eine parallel zur Lichtbündelquerachse 51 verlaufende Breitenerstreckung 53 der ersten Lichtfläche 49 im Bereich des Anschlagfingers 17 größer ist als eine sich zwischen zwei Seitenrändern 54 erstreckende Breite 55 des Anschlagfingers 17. Auf diese Weise können auch Objektflächen 42 seitlich der Verstellrichtung 39 erfasst werden. Außerdem können Objektflächen 42 bei einer Verstellung des Anschlagfingers 17 in andere Verstellrichtungen, beispielsweise in die in der Fig. 3 veranschaulichte Verstellrichtung 45, erfasst werden. Daher kann gegebenenfalls zur Überwachung in andere Verstellrichtungen die Einstrahlung weiterer, anders ausgerichteter Lichtbündel erübrigt werden. Im Besonderen wird durch die mit dem Anschlagfinger 17 bewegungsgekoppelte Beleuchtungsvorrichtung 36 das in der Fig. 3 dargestellte, erste Lichtbündel 38 sowohl bei einer Verstellbewegung des Anschlagfingers in die Verstellrichtung 39 als auch in die Verstellrichtung 45 jeweils in den dem Anschlagfinger vorauseilenden Bereich gestrahlt.

Im Besonderen zur Vermeidung von Verletzungen kann vorgesehen sein, dass das erste Lichtbündel 38 in den dem Anschlagfinger 17 in Verstellrichtung 39 vorauseilenden Bereich wenigstens in einem Mindestabstand 56 zu einer in Verstellrichtung 39 erstvorstoßenden Randbegrenzung 57 des Anschlagfingers 17 gestrahlt wird. Der Mindestabstand 56 kann zumindest durch einen steuerungs- und antriebstechnisch bedingten, maximalen Anhalteweg für den Anschlagfinger 17, plus einem maximal möglichen Positionsfehler des Anschlagfingers 17 bzw. der Randbegrenzung 57 des Anschlagfingers 17 gegeben sein. Der Anhalteweg kann hierbei einen antriebsbedingten Bremsweg, sowie einen Reaktionsweg enthalten bzw. berücksichtigen. Der Reaktionsweg wiederum kann durch die Messzeit bzw. Messzykluszeit, also die maximal mögliche verstreichende Zeit vom Erscheinen der ersten Lichtabbildung 43 auf einer Hindernis- bzw. Objektoberfläche 42 bis zum Erfassen der ersten Lichtabbildung 43, und durch die durch Buszyklen und Berechnungszyklen der Steuerungsvorrichtung 23 bedingten Verzögerungen, bestimmt sein. Die genannten Parameter zur Festlegung des Mindestabstands 56 müssen je nach der Ausgestaltung einer jeweiligen Werkstückbearbeitungsmaschine 1 natürlich individuell berücksichtigt bzw. berechnet werden.

In der Fig. 4 ist eine weitere und gegebenenfalls für sich eigenständige Ausführungsform des Verfahrens bzw. der Vorrichtung veranschaulicht, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Bei der in der Fig. 4 dargestellten Weiterbildung kann vorgesehen sein, dass mittels der mit dem Anschlagfinger 17 bewegungsgekoppelten Beleuchtungsvorrichtung 36 eine zweite Lichtabbildung 58 auf eine mittels der wenigstens einen optischen Erfassungsvorrichtung 37 erfassbare Oberfläche 59 des Anschlagfingers 17, projiziert wird. Eine derartige, zweite Lichtabbildung 58 kann bei einer mit dem Anschlagfinger 17 bewegungsgekoppelt verstellbaren Beleuchtungsvorrichtung 36, siehe Fig. 2, permanent im Überwachungsbereich 41 der optischen Erfassungsvorrichtung 37 erfasst werden. Auf diese Weise kann die Überwachungsvorrichtung 35 hinsichtlich einer ordnungsgemäßen Funktion überwacht werden. Im Falle, dass die zweite Lichtabbildung 58 im Betrieb der Werkstückbearbeitungsmaschine 1 nicht erfasst wird, kann vorgesehen sein, dass umgehend eine Sicherheitsmaßnahme ausgelöst bzw. eingeleitet wird.

Wie in der Fig. 4 dargestellt ist, kann die zweite Lichtabbildung 58 in Form eines parallel zu einer Anlegefläche 21 des Anschlagfingers 17 verlaufenden, zweiten Lichtstreifens 60 auf die Oberfläche 59 des Anschlagfingers 17 projiziert werden. Beispielsweise kann vorgesehen sein, dass ein Linienlaser 52 zur Projektion eines parallel zu einer Anlegefläche 21 des Anschlagfingers 17 verlaufenden, zweiten Lichtstreifens 60 auf die Oberfläche 59 des Anschlagfingers 17 ausgebildet ist.

Wie weiters in der Fig. 4 dargestellt ist, kann zusätzlich vorgesehen sein, dass mittels der mit dem Anschlagfinger 17 bewegungsgekoppelten Beleuchtungsvorrichtung 36, siehe Fig. 2, ein parallel zum zweiten Lichtstreifen 60 verlaufender, dritter Lichtstreifen 61 beabstandet zum zweiten Lichtstreifen 60 auf die Oberfläche 59 des Anschlagfingers 17 projiziert wird. Wiederum kann ein Linienlaser 52 der Beleuchtungsvorrichtung 36 zur Projektion eines parallel zum zweiten Lichtstreifen 60 verlaufenden, dritter Lichtstreifens beabstandet zum zweiten Lichtstreifen auf die Oberfläche 59 des Anschlagfingers 17 ausgebildet sein.

Auch im Falle der in der Fig. 4 dargestellten zweiten und dritten, linienförmigen Lichtabbildungen bzw. Lichtstreifen 60, 61 kann vorgesehen sein, dass der zweite Lichtstreifen 60 bzw. der dritte Lichtstreifen 61 durch ein zweites Lichtbündel 62, respektive ein drittes Lichtbündel 63 erzeugt werden. Das entsprechende zweite Lichtbündel 62 respektive das dritte Lichtbündel 63 sind aus Gründen der besseren Ersichtlichkeit in der Fig. 4 wiederum nur in der Abbildungsebene des zweiten Lichtstreifens 60, respektive des dritten Lichtstreifens 61 dargestellt. Das zweite Lichtbündel 62 und/oder das dritte Lichtbündel 63 können aus den bereits anhand des ersten Lichtbündels 38 beschriebenen vorteilhaften Aspekten, eine zweite Breitenerstreckung 64 respektive eine dritte Breitenerstreckung 65 aufweisen, welche Breitenerstreckungen 64, 65 größer gewählt sein können als eine Breite 55 des Anschlagfingers 17.

Die Beleuchtungsvorrichtung 36 bzw. der dargestellte Linienlaser 52 kann zur Ausrichtung des ersten Lichtbündels 38, sowie gegebenenfalls zur Positionierung der zweiten und dritten Lichtstreifen 61, 62 auf die Oberfläche 59 des Anschlagfingers 17 jeweils auch hinsichtlich Position und/oder Ausrichtung justierbar sein.

Des Weiteren kann vorgesehen sein, aus der im Überwachungsbereich 41, bildlich erfassten Lage bzw. Position des zweiten Lichtstreifens 60 und/oder des dritten Lichtstreifens 61 die Position des Anschlagfingers 17 zu ermitteln bzw. rechnerisch zu bestimmen. Dies ist bei bekannter Position und Ausrichtung der bilderfassenden Erfassungsvorrichtung(en) 37, und damit bei bekannten Koordinaten, etwa Maschinenkoordinatensystem in dem Überwachungsbereich 41 zumindest entlang einer parallel zu der Oberfläche 59 des Anschlagfingers 17 ausgerichteten Abbildungsebene möglich. Etwaige Ungenauigkeiten aufgrund von geringfügigen Verstellbewegungen bzw. Positionen eines Anschlagfingers 17 in vertikaler Richtung, beispielsweise also entlang der R-Achsausrichtung 26, siehe Fig. 1 und Fig. 2, sind gegebenenfalls zu berücksichtigen. Jedoch können solche möglichen Positionserfassungsungenauigkeiten grundsätzlich aufgrund der ansteuerungstechnisch jederzeit bekannten Position eines Anschlagfingers 17 in R-Achsausrichtung 26 rechnerisch korrigiert werden.

Schließlich kann bei Projektion eines zweiten Lichtstreifens 60 und eines beanstandeten, dritten Lichtstreifens 61 auf die Oberfläche 59 des Anschlagfingers 17, auch ein bildlich erfasster, scheinbarer Normalabstand 66 zwischen dem zweiten Lichtstreifen 60 und dem dritten Lichtstreifen 61 zur Bestimmung einer Position des Anschlagfingers 17 genutzt werden. Zum Beispiel kann so der Abstand einer werkstückzufuhrseitigen Randbegrenzung 57 des Anschlagfingers 17 zu der Kamera 46 rechnerisch ermittelt werden, da sich der scheinbare Normalabstand 66 zumindest in Blickrichtung der Kamera 46 mit der Entfernung von der Kamera 46 ändern kann. Dies gilt natürlich wiederum zumindest für Verstellbewegungen des Anschlagfingers in der Abbildungsebene für den zweiten und dritten Lichtstreifen 60, 61.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Werkstückbearbeitungsmaschine | 31 | Servomotor |
| 2 | Biegemaschine | 32 | Zahnritzel |
| 3 | Abkantpresse | 33 | Führungsbahn |
| 4 | Werkstück | 34 | Konsole |
| 5 | Aufstandsfläche | 35 | Überwachungsvorrichtung |
| 6 | Tischbalken | 36 | Beleuchtungsvorrichtung |
| 7 | Pressbalken | 37 | Erfassungsvorrichtung |
| 8 | Antriebsmittel | 38 | Lichtbündel |
| 9 | Hydraulikzylinder | 39 | Verstellrichtung |
| 10 | Biegewerkzeug | 40 | Spiegelfläche |
| 11 | Biegewerkzeug | 41 | Überwachungsbereich |
| 12 | Werkzeugaufnahme | 42 | Objektfläche |
| 13 | Stirnfläche | 43 | Lichtabbildung |
| 14 | Werkzeugaufnahme | 44 | Überwachungsbereich |
| 15 | Stirnfläche | 45 | Verstellrichtung |
| 16 | Anschlagvorrichtung | 46 | Kamera |
| 17 | Anschlagfinger | 47 | Rückstellbewegung |
| 18 | Pressenraum | 48 | Strahlengang |
| 19 | Anschlagposition | 49 | Lichtfläche |
| 20 | Werkstückzufuhrseite | 50 | Lichtfläche |
| 21 | Anlegefläche | 51 | Lichtbündelquerachse |
| 22 | Verstellachse | 52 | Linienlaser |
| 23 | Steuerungsvorrichtung | 53 | Breitenerstreckung |
| 24 | X-Achsausrichtung | 54 | Seitenrand |
| 25 | Z-Achsausrichtung | 55 | Breite |
| 26 | R-Achsausrichtung | 56 | Mindestabstand |
| 27 | Auflagefläche | 57 | Randbegrenzung |
| 28 | Biegeebene | 58 | Lichtabbildung |
| 29 | Antriebsanordnung | 59 | Oberfläche |
| 30 | Führungsbahn | 60 | Lichtstreifen |
| 61 | Lichtstreifen | | |
| 62 | Lichtbündel | | |
| 63 | Lichtbündel | | |
| 64 | Brei tenerstreckung | | |
| 65 | Brei tenerstreckung | | |
| 66 | Normal ab stand | | |

## Patentansprüche

1. Verfahren zum Betreiben einer Werkstückbearbeitungsmaschine (1), insbesondere einer Biegemaschine (2), umfassend
automatisiert gesteuertes Verstellen zumindest eines Anschlagfingers (17) einer Anschlagvorrichtung (16) entlang zumindest einer, angetriebenen Verstellachse (22), in eine zum Positionieren eines Werkstücks (4) vorgesehene Anschlagposition (19),
Positionieren des Werkstücks (4) durch Anlegen des Werkstücks (4) an einer Anlegefläche (21) des Anschlagfingers (17),
**dadurch gekennzeichnet, dass**
während einer automatisiert gesteuerten Verstellbewegung des Anschlagfingers (17) entlang der zumindest einen Verstellachse (22), mittels einer mit dem Anschlagfinger (17) entlang der zumindest einen Verstellachse (22) bewegungsgekoppelten Beleuchtungsvorrichtung (36), ein erstes Lichtbündel (38) in einen dem Anschlagfinger (17) in Verstellrichtung (39, 45) vorauseilenden Bereich gestrahlt wird,
und dass mittels wenigstens einer ortsfesten, optischen Erfassungsvorrichtung (37) ein Überwachungsbereich (41) für Verstellbewegungen des Anschlagfingers (17) überwacht wird, und dass bei einer Erfassung einer durch das erste Lichtbündel (38) auf einer Objektfläche (42) abgebildeten ersten Lichtabbildung (43), eine Sicherheitsmaßnahme eingeleitet wird.

2. Verfahren nach Anspruch 1, **dadurch gekennzeichnet, dass** die Beleuchtungsvorrichtung (36) wenigstens entlang zwei Verstellachsen (22) mit dem Anschlagfinger (17) bewegungsgekoppelt verstellt wird.

3. Verfahren nach Anspruch 2, **dadurch gekennzeichnet, dass** das erste Lichtbündel (38) über eine optische Spiegelfläche (40), insbesondere eine flache Spiegelfläche in den dem Anschlagfinger (17) in Verstellrichtung (39, 45) vorauseilenden Bereich gerichtet wird.

4. Verfahren nach einem der vorhergehenden Ansprüche, **dadurch gekennzeichnet, dass** das erste Lichtbündel (38) als zumindest weitestgehend paralleles Lichtbündel (38), dessen Strahlengang (48) eine erste, ebene Lichtfläche (49) bildet, in den dem Anschlagfinger (17) vorauseilenden Bereich gestrahlt wird.

5. Verfahren nach Anspruch 4, **dadurch gekennzeichnet, dass** das erste Lichtbündel (38) derart in den dem Anschlagfinger (17) in Verstellrichtung (39) vorauseilenden Bereich gestrahlt wird, dass eine quer zum Strahlengang (48) verlaufende Lichtbündelquerachse (51) der ersten Lichtfläche (49) zumindest weitestgehend parallel zu einer Anlegefläche (21) des Anschlagfingers (17) ausgerichtet ist.

6. Verfahren nach Anspruch 5, **dadurch gekennzeichnet, dass** das erste Lichtbündel (38) derart in den dem Anschlagfinger (17) in Verstellrichtung (39) vorauseilenden Bereich gestrahlt wird, dass eine parallel zur Lichtbündelquerachse (51) verlaufende Breitenerstreckung (53) der ersten Lichtfläche (49) im Bereich des Anschlagfingers (17) größer ist als eine sich zwischen zwei Seitenrändern (54) erstreckende Breite (55) des Anschlagfingers (17).

7. Verfahren nach einem der Ansprüche 4 bis 6, **dadurch gekennzeichnet, dass** das erste Lichtbündel (38) mittels einer Beleuchtungsvorrichtung (36) umfassend einen Linienlaser (52) in den in den dem Anschlagfinger (17) in Verstellrichtung (39, 45) vorauseilenden Bereich gestrahlt wird.

8. Verfahren nach einem der vorhergehenden Ansprüche, **dadurch gekennzeichnet, dass** das erste Lichtbündel (38) in den dem Anschlagfinger (17) in Verstellrichtung (39) vorauseilenden Bereich wenigstens in einem Mindestabstand (56) zu einer in Verstellrichtung (39) erstvorstoßenden Randbegrenzung (57) des Anschlagfingers (17) gestrahlt wird.

9. Verfahren nach einem der vorhergehenden Ansprüche, **dadurch gekennzeichnet, dass** die Beleuchtungsvorrichtung (36) in Richtung einer senkrecht zu einer Aufstandsfläche (5) ausgerichteten, vertikalen Verstellachse (22) nicht verstellt wird.

10. Verfahren nach einem der vorherhergehenden Ansprüche, **dadurch gekennzeichnet, dass** mittels der mit dem Anschlagfinger (17) bewegungsgekoppelten Beleuchtungsvorrichtung (36) eine zweite Lichtabbildung (58) auf eine mittels der wenigstens einen optischen Erfassungsvorrichtung (37) erfassbare Oberfläche (59) des Anschlagfingers (17), projiziert wird.

11. Verfahren nach Anspruch 10, **dadurch gekennzeichnet, dass** die zweite Lichtabbildung (58) in Form eines parallel zu einer Anlegefläche (21) des Anschlagfingers (17) verlaufenden, zweiten Lichtstreifens (60) auf die Oberfläche (59) des Anschlagfingers (17) projiziert wird.

12. Verfahren nach Anspruch 11, **dadurch gekennzeichnet, dass** mittels der mit dem Anschlagfinger (17) bewegungsgekoppelten Beleuchtungsvorrichtung (36) ein parallel zum zweiten Lichtstreifen (60) verlaufender, dritter Lichtstreifen (61) beabstandet zu dem zweiten Lichtstreifen (60) auf die Oberfläche (59) des Anschlagfingers (17) projiziert wird.

13. Verfahren nach einem der vorhergehenden Ansprüche, **dadurch gekennzeichnet, dass** der Überwachungsbereich (41) mittels wenigstens einer ortsfesten, bilderfassenden Kamera (46) überwacht wird.

14. Verfahren nach einem der Ansprüche 10 bis 12 und Anspruch 13, **dadurch gekennzeichnet, dass** aus der bildlich erfassten Lage des zweiten Lichtstreifens (60) und/oder des dritten Lichtstreifens (61) im Überwachungsbereich (41) eine Position des Anschlagfingers (17) rechnerisch ermittelt wird.

15. Verfahren nach Anspruch 12 und 13, **dadurch gekennzeichnet, dass** aus einem bildlich erfassten, scheinbaren Normalabstand (66) zwischen dem zweiten Lichtstreifen (60) und dem dritten Lichtstreifen (61), ein Abstand einer werkstückzufuhrseitigen Randbegrenzung (57) des Anschlagfingers (17) zu der Kamera (46), rechnerisch ermittelt wird.

16. Verfahren nach einem der vorhergehenden Ansprüche, **dadurch gekennzeichnet, dass** das erste Lichtbündel (38) bei einem automatisiert gesteuerten Start einer Verstellbewegung des Anschlagfingers (17) in eine Anschlagposition (19) umgehend aktiviert wird.

17. Verfahren nach einem der vorhergehenden Ansprüche, **dadurch gekennzeichnet, dass** das erste Lichtbündel (38) bei Erreichen einer steuerungstechnisch vorgegebenen Anschlagposition (19) umgehend deaktiviert wird.

18. Verfahren nach einem der vorhergehenden Ansprüche, **dadurch gekennzeichnet, dass** das erste Lichtbündel (38) während einer Verstellbewegung in eine Anschlagposition (19), in einem steuerungstechnisch vorgebbaren Abstand von der jeweiligen Anschlagposition (19) während der Verstellbewegung bis zum Erreichen der jeweiligen Anschlagposition (19) deaktiviert wird.

19. Verfahren nach einem der vorhergehenden Ansprüche, **dadurch gekennzeichnet, dass** das erste Lichtbündel (38) bei einem Stillstand des Anschlagfingers (17) deaktiviert wird.

20. Verfahren nach einem der vorhergehenden Ansprüche, **dadurch gekennzeichnet, dass** als automatisiert gesteuerte Sicherheitsmaßnahme eine unverzügliche Rückstellbewegung des Anschlagfingers (17) ausgelöst wird.

21. Verfahren nach einem der vorhergehenden Ansprüche, **dadurch gekennzeichnet, dass** bei einem Stillstand des Anschlagfingers (17) keine automatisiert gesteuerte Sicherheitsmaßnahme ausgelöst wird.

22. Verfahren nach einem der vorhergehenden Ansprüche, **dadurch gekennzeichnet, dass** das erste Lichtbündel (38) während einer entlang einer horizontal verlaufenden Verstellachse (22) in Richtung einer Werkstückzufuhrseite (20) ausgeführten Verstellbewegung des Anschlagfingers (17) in eine Anschlagposition (19), in einen dem Anschlagfinger (17) vorauseilenden Bereich gestrahlt wird.

23. Werkstückbearbeitungsmaschine (1), insbesondere Biegemaschine (2), aufweisend
eine automatisiert gesteuerte Anschlagvorrichtung (16), umfassend zumindest einen automatisiert gesteuert entlang zumindest einer angetriebenen Verstellachse (22) verstellbaren Anschlagfinger (17) mit wenigstens einer zum Anlegen des umzuformenden Werkstücks in einer Anschlagposition (19) vorgesehenen Anlegefläche (21),
eine Steuerungsvorrichtung (23) zur automatisierten Steuerung von Verstellbewegungen des Anschlagfingers (17) entlang der zumindest einen Verstellachse (22),
wobei eine mit der Steuerungsvorrichtung (23) signalverbundene Überwachungsvorrichtung (35) vorgesehen ist,
**dadurch gekennzeichnet, dass**
die Überwachungsvorrichtung (35) eine Beleuchtungsvorrichtung (36) und wenigstens eine optische Erfassungsvorrichtung (37) umfasst,
wobei die Beleuchtungsvorrichtung (36) mit dem Anschlagfinger (17) bewegungsgekoppelt angeordnet ist, und im Betrieb der Werkstückbearbeitungsmaschine (1) während einer automatisiert gesteuerten Verstellbewegung des zumindest einen Anschlagfingers (17), zur Abstrahlung eines ersten Lichtbündels (38) in einen dem Anschlagfinger (17) in Verstellrichtung (39, 45) vorauseilenden Bereich ausgebildet ist,
und dass die wenigstens eine Erfassungsvorrichtung (37) ortsfest zur Überwachung eines Überwachungsbereiches (41) angeordnet ist, und zur Erfassung einer durch das erste Lichtbündel (38) beim Auftreffen auf eine Objektfläche (42) hervorgerufenen, ersten Lichtabbildung (43) ausgebildet ist,
und dass die Steuerungsvorrichtung (23) zum Auslösen wenigstens einer Sicherheitsmaßnahme bei aktiviertem, ersten Lichtbündel (38) und einer Erfassung der ersten Lichtabbildung (43) durch die wenigstens eine optische Erfassungsvorrichtung (37) während der Verstellbewegung des Anschlagfingers (17), ausgebildet ist.

24. Werkstückbearbeitungsmaschine nach Anspruch 23, **dadurch gekennzeichnet, dass** die Beleuchtungsvorrichtung (36) wenigstens entlang zweier angetriebener Verstellachsen (22) mit dem Anschlagfinger (17) bewegungsgekoppelt verstellbar angeordnet ist.

25. Werkstückbearbeitungsmaschine nach Anspruch 23 oder 24, **dadurch gekennzeichnet, dass** zur Ausrichtung des ersten Lichtbündels (38) in den dem Anschlagfinger (17) vorauseilenden Bereich eine optische Spiegelfläche (40), insbesondere eine flache Spiegelfläche angeordnet ist.

26. Werkstückbearbeitungsmaschine nach einem der Ansprüche 23 bis 25, **dadurch gekennzeichnet, dass** die Beleuchtungsvorrichtung (36) einen Linienlaser (52) umfasst, welcher zur Abstrahlung eines zumindest weitestgehend parallelen, ersten Lichtbündels (38), dessen Strahlengang (48) in einer ersten, ebenen Lichtfläche (49) liegt, in den dem Anschlagfinger (17) vorauseilenden Bereich, ausgebildet ist.

27. Werkstückbearbeitungsmaschine nach Anspruch 26, **dadurch gekennzeichnet, dass** der Linienlaser (52) derart angeordnet ist, dass im Betrieb der Werkstückbearbeitungsmaschine (1) eine quer zu dem Strahlengang (48) verlaufende Lichtbündelquerachse (51) der ersten Lichtfläche (49) zumindest weitestgehend parallel zu einer Anlegefläche (21) des Anschlagfingers (17) ausgerichtet ist.

28. Werkstückbearbeitungsmaschine nach Anspruch 26 oder 27, **dadurch gekennzeichnet, dass** der Linienlaser (52) derart angeordnet ist, dass im Betrieb der Werkstückbearbeitungsmaschine (1) eine parallel zu der Lichtbündelquerachse (51) verlaufende Breitenerstreckung (53) der ersten Lichtfläche (49) im Bereich des Anschlagfingers (17) größer ist als eine sich zwischen zwei Seitenrändern (54) erstreckende Breite (55) des Anschlagfingers (17).

29. Werkstückbearbeitungsmaschine nach einem der Ansprüche 26 bis 28, **dadurch gekennzeichnet, dass** der Linienlaser (52) zur Projektion eines parallel zu einer Anlegefläche (21) des Anschlagfingers (17) verlaufenden, zweiten Lichtstreifens (60) auf die Oberfläche (59) des Anschlagfingers (17) ausgebildet ist.

30. Werkstückbearbeitungsmaschine nach Anspruch 29, **dadurch gekennzeichnet, dass** der Linienlaser (52) zur Projektion eines parallel zum zweiten Lichtstreifen (60) verlaufenden, dritter Lichtstreifens (61) beabstandet zu dem zweiten Lichtstreifen (60) auf die Oberfläche (59) des Anschlagfingers (17) ausgebildet ist.

31. Werkstückbearbeitungsmaschine nach einem der Ansprüche 23 bis 30, **dadurch gekennzeichnet, dass** die wenigstens eine, optische Erfassungsvorrichtung (37) eine ortsfeste, bilderfassende Kamera (46), insbesondere eine CCD-Kamera umfasst.

32. Werkstückbearbeitungsmaschine nach einem der Ansprüche 25 bis 31, **dadurch gekennzeichnet, dass** sich die Spiegelfläche (40) über die gesamte Länge eines an der Werkstückbearbeitungsmaschine (1) ausgebildeten Tischbalkens (6), erstreckt.

33. Werkstückbearbeitungsmaschine nach einem der Ansprüche 23 bis 32, **dadurch gekennzeichnet, dass** die Beleuchtungsvorrichtung (36) entlang einer senkrecht zu einer Aufstandsfläche (5) ausgerichteten, vertikalen Verstellachse (22) mit dem Anschlagfinger (17) nicht bewegungsgekoppelt angeordnet ist.

34. Werkstückbearbeitungsmaschine nach einem der Ansprüche 23 bis 33, **dadurch gekennzeichnet, dass** zumindest eine horizontal verlaufende, angetriebene Verstellachse (22) zum automatisiert gesteuerten Verstellen des zumindest einen Anschlagfingers (17) in Richtung einer Werkstückzufuhrseite (20), in eine Anschlagposition (19) vorgesehen ist.

## Claims

1. A method for operation of a workpiece processing machine (1), in particular a bending machine (2), comprising
automatically controlled adjustment of at least one stop finger (17) of a stop device (16) along at least one driven positioning axis (22) into a stop position (19) provided for positioning of a workpiece (4),
positioning of the workpiece (4) by placement of the workpiece (4) against a contact surface (21) of the stop finger (17),
**characterized in that**
during an automatically controlled positioning movement of the stop finger (17) along the at least one adjustment axis (22), a first light beam (38) is radiated into an area ahead of the stop finger (17) in the positioning direction (39, 45), by means of an lighting device (36) motion-coupled to the stop finger (17), along the at least one positioning axis (22),
and **in that** a observation region (41) for positioning movements of the stop finger (17) is monitored by means of at least one stationary optical detection device (37),
and **in that**, in the event of detection of a first light image (43) projected by the first light beam (38) onto an object surface (42), an automatically controlled safety measure is initiated.

2. The method according to claim 1, **characterized in that** the lighting device (36) is adjusted with the stop finger (17) in a motion-coupled manner at least along two positioning axes (22).

3. The method according to claim 2, **characterized in that** the first light beam (38) is directed into the area ahead of the stop finger (17) in the positioning direction (39, 45) by an optical mirror surface (40), in particular a flat mirror surface.

4. The method according to one of the preceding claims, **characterized in that** the first light beam (38) is radiated into the area ahead of the stop finger (17) as an at least largely parallel light beam (38) whose beam path (48) forms a first, planar light surface (49).

5. The method according to claim 4, **characterized in that** the first light beam (38) is radiated into the area ahead of the stop finger (17) in the positioning direction (39) such that a light beam transverse axis (51) of the first light surface (49) running transversely to the beam path (48) is aligned at least largely parallel to a contact surface (21) of the stop finger (17).

6. The method according to claim 5, **characterized in that** the first light beam (38) is radiated into the area ahead of the stop finger (17) in the positioning direction (39) such that a width extent (53) of the first light surface (49) running in parallel to the light beam transverse axis (51) in the area of the stop finger (17) is bigger than a width (55) of the stop finger (17) extending between two side edges (54).

7. The method according to one of claims 4 to 6, **characterized in that** the first light beam (38) is radiated into the area ahead of the stop finger (17) in the positioning direction (39, 45) by means of an lighting device (36) comprising a line laser (52).

8. The method according to one of the preceding claims, **characterized in that** the first light beam (38) is radiated into the area ahead of the stop finger (17) in the positioning direction (39) at least at a minimum distance (56) from an edge limitation (57) of the stop finger (17) that leads in the positioning direction (39).

9. The method according to one of the preceding claims, **characterized in that** the lighting device (36) is not adjusted in the direction of a vertical positioning axis (22) that is aligned perpendicularly to a footprint (5).

10. The method according to one of the preceding claims, **characterized in that** a second light image (58) is projected by the lighting device (36) that is motion-coupled to the stop finger (17) onto a surface (59) of the stop finger (17) that is detectable by means of the at least one optical detection device (37).

11. The method according to claim 10, **characterized in that** the second light image (58) is projected onto the surface (59) of the stop finger (17) in the form of a second light strip (60) running in parallel to a contact surface (21) of the stop finger (17).

12. The method according to claim 11, **characterized in that** a third light strip (61) running in parallel to the second light strip (60) is projected onto the surface (59) of the stop finger (17) at a distance from the second light strip (60), by means of the lighting device (36) that is motion-coupled to the stop finger (17).

13. The method according to one of the preceding claims, **characterized in that** the observation region (41) is monitored by means of at least one stationary imaging camera (46).

14. The method according to one of claims 10 to 12 and claim 13, **characterized in that** a position of the stop finger (17) is determined mathematically from the visually detected location of the second light strip (60) and/or the third light strip (61) in the observation region (41).

15. The method according to claims 12 and 13, **characterized in that** a distance between an edge limitation (57) of the stop finger (17) on the workpiece feed side and the camera (46) is determined mathematically from a visually detected, apparent perpendicular normal distance (66) between the second light strip (60) and the third light strip (61).

16. The method according to one of the preceding claims, **characterized in that** the first light beam (38) is immediately activated in the event of an automatically controlled start of an positioning movement of the stop finger (17) into a stop position (19).

17. The method according to one of the preceding claims, **characterized in that** the first light beam (38) is immediately deactivated upon reaching a stop position (19) that is predefined by control technology.

18. The method according to one of the preceding claims, **characterized in that**, during an positioning movement into a stop position (19), the first light beam (38) is deactivated during the positioning movement, at a distance from the respective stop position (19) that can be predefined by control technology, until the respective stop position (19) is reached.

19. The method according to one of the preceding claims, **characterized in that** the first light beam (38) is deactivated when the stop finger (17) is at a standstill.

20. The method according to one of the preceding claims, **characterized in that** an immediate retraction movement of the stop finger (17) is triggered as an automatically controlled safety measure.

21. The method according to one of the preceding claims, **characterized in that** no automatically controlled safety measure is triggered when the stop finger (17) is at a standstill.

22. The method according to one of the preceding claims, **characterized in that** the first light beam (38) is radiated into an area ahead of the stop finger (17) during an positioning movement of the stop finger (17) into a stop position (19) performed along a horizontal positioning axis (22) in the direction of a workpiece feed side (20).

23. A workpiece processing machine (1), in particular bending machine (2), having
an automatically controlled stop device (16), comprising at least one automatically controlled stop finger (17) that is displaceable along at least one driven positioning axis (22) and has at least one contact surface (21) provided for placement of the tool to be formed in a stop position (19),
a control device (23) for automatic control of positioning movements of the stop finger (17) along the at least one positioning axis (22),
wherein an observation device (35) that is signal-connected to the control device (23) is provided,
**characterized in that**
the observation device (35) comprises an lighting device (36) and at least one optical detection device (37),
wherein the lighting device (36) is arranged to be motion-coupled to the stop finger (17), and is designed for emitting a first light beam (38) into an area ahead of the stop finger (17) in the positioning direction (39, 45) during an automatically controlled positioning movement of the at least one stop finger (17) in operation of the workpiece processing machine (1),
and **in that** the at least one detection device (37) is arranged to be stationary for observation of an observation region (41), and is designed for detection of a first light image (43) created when the first light beam (38) is incident on an object surface (42), and **in that** the control device (23) is designed for triggering at least one safety measure in the event of the first light beam (38) being activated and a detection of the first light image (43) by the at least one optical detection device (37) taking place during the positioning movement of the stop finger (17).

24. The workpiece processing machine according to claim 23, **characterized in that** the lighting device (36) is arranged to be adjustable in a motion-coupled manner with the stop finger (17) at least along two driven positioning axes (22).

25. The workpiece processing machine according to claim 23 or 24, **characterized in that** an optical mirror surface (40), in particular a flat mirror surface, is arranged for orientation of the first light beam (38) into the area ahead of the stop finger (17).

26. The workpiece processing machine according to one of claims 23 to 25, **characterized in that** the lighting device (36) comprises a line laser (52) which is designed for emission, into the area ahead of the stop finger (17), of an at least largely parallel first light beam (38) whose beam path (48) is located in a first, planar light surface (49).

27. The workpiece processing machine according to claim 26, **characterized in that** the line laser (52) is arranged such that a light beam transverse axis (51) of the first light surface (49), which light beam transverse axis (51) runs transversely to the beam path (48) is aligned at least largely parallel to a contact surface (21) of the stop finger (17) in operation of the workpiece processing machine (1).

28. The workpiece processing machine according to claim 26 or 27, **characterized in that** the line laser (52) is arranged such that a width extent (53) of the first light surface (49) running in parallel to the light beam transverse axis (51) in the area of the stop finger (17) is larger than a width (55) of the stop finger (17) extending between two side edges (54) in operation of the workpiece processing machine (1).

29. The workpiece processing machine according to one of claims 26 to 28, **characterized in that** the line laser (52) is designed for projection of a second light strip (60) running in parallel to a contact surface (21) of the stop finger (17) onto the surface (59) of the stop finger (17).

30. The workpiece processing machine according to claim 29, **characterized in that** the line laser (52) is designed for projection of a third light strip (61) that runs in parallel to the second light strip (60) at a distance from the second light strip (60) onto the surface (59) of the stop finger (17).

31. The workpiece processing machine according to one of claims 23 to 30, **characterized in that** the at least one optical detection device (37) comprises a stationary imaging camera (46), in particular a CCD camera.

32. The workpiece processing machine according to one of claims 25 to 31, **characterized in that** the mirror surface (40) extends over the entire length of a table beam (6) formed on the workpiece processing machine (1).

33. The workpiece processing machine according to one of claims 23 to 32, **characterized in that** the lighting device (36) is not arranged in a motion-coupled manner to the stop finger (17) along a vertical positioning axis (22) that is aligned perpendicularly to a footprint (5).

34. The workpiece processing machine according to one of claims 23 to 33, **characterized in that** at least one driven positioning axis (22) running horizontally is provided for automatically controlled adjustment of the at least one stop finger (17) in the direction of a workpiece feed side (20) into a stop position (19).

## Revendications

1. Procédé de fonctionnement d'une machine d'usinage de pièces (1), en particulier d'une presse plieuse (2), comprenant
le déplacement commandé de façon automatisée d'au moins un doigt de butée (17) d'un dispositif de butée (16), le long d'au moins un axe de déplacement (22) entraîné, vers une position de butée (19) prévue pour le positionnement d'une pièce (4),
le positionnement de la pièce (4) par la pose de la pièce (4) sur une surface de pose (21) du doigt de butée (17),
**caractérisé en ce que**,
pendant un mouvement de déplacement commandé de façon automatisée du doigt de butée (17) le long de l'axe de déplacement (22) au moins au nombre de un, au moyen d'un dispositif d'éclairage (36) couplé en mouvement avec le doigt de butée (17) le long de l'axe de déplacement (22) au moins au nombre de un, un premier faisceau lumineux (38) est émis dans une zone devançant le doigt de butée (17) dans la direction de déplacement (39, 45),
et **en ce que**, au moyen d'au moins un dispositif de détection (37) optique stationnaire, une zone de surveillance (41) pour des mouvements de déplacement du doigt de butée (17) est surveillée,
et **en ce qu'**une mesure de sécurité est mise en œuvre lors d'une détection d'une première forme lumineuse (43) reproduite sur une surface d'objet (42) par le premier faisceau lumineux (38).

2. Procédé selon la revendication 1, **caractérisé en ce que** le dispositif d'éclairage (36) est déplacé de façon couplée en mouvement avec le doigt de butée (17) au moins le long de deux axes de déplacement (22).

3. Procédé selon la revendication 2, **caractérisé en ce que** le premier faisceau lumineux (38) est, par le biais d'une surface miroir (40) optique, en particulier une surface miroir plate, dirigé dans la zone qui devance le doigt de butée (17) dans la direction de déplacement (39, 45).

4. Procédé selon l'une des revendications précédentes, **caractérisé en ce que** le premier faisceau lumineux (38) est émis dans la zone devançant le doigt de butée (17), en tant que faisceau lumineux (38) au moins très largement parallèle dont la trajectoire de faisceau (48) forme une première surface lumineuse (49) plane.

5. Procédé selon la revendication 4, **caractérisé en ce que** le premier faisceau lumineux (38) est émis dans la zone devançant le doigt de butée (17) dans la direction de déplacement (39) de telle sorte qu'un axe transversal de faisceau lumineux (51) de la première surface lumineuse (49) qui est transversal à la trajectoire de faisceau (48) est orienté au moins très largement parallèlement à une surface de pose (21) du doigt de butée (17).

6. Procédé selon la revendication 5, **caractérisé en ce que** le premier faisceau lumineux (38) est émis dans la zone devançant le doigt de butée (17) dans la direction de déplacement (39) de telle sorte qu'une étendue en largeur (53) de la première surface lumineuse (49) qui est parallèle à l'axe transversal de faisceau lumineux (51) est plus grande dans la zone du doigt de butée (17) qu'une largeur (55) du doigt de butée (17) s'étendant entre deux bords latéraux (54).

7. Procédé selon l'une des revendications 4 à 6, **caractérisé en ce que**, au moyen d'un dispositif d'éclairage (36) comprenant un laser linéaire (52), le premier faisceau lumineux (38) est émis dans la zone devançant le doigt de butée (17) dans la direction de déplacement (39, 45).

8. Procédé selon l'une des revendications précédentes, **caractérisé en ce que** le premier faisceau lumineux (38) est émis dans la zone devançant le doigt de butée (17) dans la direction de déplacement (39) au moins à une distance minimale (56) d'une limitation de bord (57) du doigt de butée (17) s'avançant en premier dans la direction de déplacement (39).

9. Procédé selon l'une des revendications précédentes, **caractérisé en ce que** le dispositif d'éclairage (36) n'est pas déplacé en direction d'un axe de déplacement (22) vertical orienté perpendiculairement à une surface de support (5).

10. Procédé selon l'une des revendications précédentes, **caractérisé en ce que**, au moyen du dispositif d'éclairage (36) couplé en mouvement avec le doigt de butée (17), une deuxième forme lumineuse (58) est projetée sur une surface (59) du doigt de butée (17) pouvant être détectée au moyen du dispositif de détection (37) optique au moins au nombre de un.

11. Procédé selon la revendication 10, **caractérisé en ce que** la deuxième forme lumineuse (58) est projetée sur la surface (59) du doigt de butée (17) sous la forme d'une deuxième bande lumineuse (60) parallèle à une surface de pose (21) du doigt de butée (17).

12. Procédé selon la revendication 11, **caractérisé en ce que**, au moyen du dispositif d'éclairage (36) couplé en mouvement avec le doigt de butée (17), une troisième bande lumineuse (61) parallèle à la deuxième bande lumineuse (60) est projetée sur la surface (59) du doigt de butée (17) à distance de la deuxième bande lumineuse (60).

13. Procédé selon l'une des revendications précédentes, **caractérisé en ce que** la zone de surveillance (41) est surveillée au moyen d'au moins une caméra (46) stationnaire de capture d'images.

14. Procédé selon l'une des revendications 10 à 12 et la revendication 13, **caractérisé en ce que**, à partir de l'emplacement, détecté sous forme d'image, de la deuxième bande lumineuse (60) et/ou de la troisième bande lumineuse (61) dans la zone de surveillance (41), une position du doigt de butée (17) est déterminée par le calcul.

15. Procédé selon les revendications 12 et 13, **caractérisé en ce que**, à partir d'un espacement normal (66) apparent, détecté sous forme d'image, entre la deuxième bande lumineuse (60) et la troisième bande lumineuse (61), un espacement d'une limitation de bord (57) du doigt de butée (17) côté d'amenée de pièce par rapport à la caméra (46) est déterminé par le calcul.

16. Procédé selon l'une des revendications précédentes, **caractérisé en ce que**, lors d'un démarrage commandé de façon automatisée d'un mouvement de déplacement du doigt de butée (17) le premier faisceau lumineux (38) est activé immédiatement vers une position de butée (19).

17. Procédé selon l'une des revendications précédentes, **caractérisé en ce que**, une fois atteinte une position de butée (19) prédéfinie par une technique de commande, le premier faisceau lumineux (38) est immédiatement désactivé.

18. Procédé selon l'une des revendications précédentes, **caractérisé en ce que**, pendant un mouvement de déplacement vers une position de butée (19), à une distance, pré-définissable par une technique de commande, de la position de butée (19) respective, le premier faisceau lumineux (38) est désactivé pendant le mouvement de déplacement jusqu'à ce que la position de butée (19) soit atteinte.

19. Procédé selon l'une des revendications précédentes, **caractérisé en ce que** le premier faisceau lumineux (38) est désactivé lors d'un arrêt du doigt de butée (17).

20. Procédé selon l'une des revendications précédentes, **caractérisé en ce qu'**un mouvement de rappel immédiat du doigt de butée (17) est déclenché en tant que mesure de sécurité commandée de façon automatisée.

21. Procédé selon l'une des revendications précédentes, **caractérisé en ce que**, lors d'un arrêt du doigt de butée (17), aucune mesure de sécurité commandée de façon automatisée n'est déclenchée.

22. Procédé selon l'une des revendications précédentes, **caractérisé en ce que**, pendant un mouvement de déplacement du doigt de butée (17) vers une position de butée (19) exécuté en direction d'un côté d'amenée de pièce (20) le long d'un axe de déplacement (22) horizontal, le premier faisceau lumineux (38) est émis dans une zone devançant le doigt de butée (17).

23. Machine d'usinage de pièces (1), en particulier presse plieuse (2), comportant un dispositif de butée (16) commandé de façon automatisée, comprenant au moins un doigt de butée (17), déplaçable en étant commandé de façon automatisée le long d'au moins un axe de déplacement (22) entraîné, avec au moins une surface de pose (21) prévue pour la pose de la pièce à façonner dans une position de butée (19),
un dispositif de commande (23) destiné à la commande automatisée de mouvements de déplacement du doigt de butée (17) le long de l'axe de déplacement (22) au moins au nombre de un,
un dispositif de surveillance (35) connecté par signal au dispositif de commande (23) étant prévu,
**caractérisée en ce que**
le dispositif de surveillance (35) comprend un dispositif d'éclairage (36) et au moins un dispositif de détection (37) optique,
le dispositif d'éclairage (36) étant disposé de façon couplée en mouvement avec le doigt de butée (17) et étant, au cours du fonctionnement de la machine d'usinage de pièces (1), pendant un mouvement de déplacement commandé de façon automatisée du doigt de butée (17) au moins au nombre de un, constitué pour l'émission d'un premier faisceau lumineux (38) vers une zone devançant le doigt de butée (17) dans la direction de déplacement (39, 45),
et **en ce que** le dispositif de détection (37) au moins au nombre de un est disposé de façon stationnaire pour la surveillance d'une zone de surveillance (41), et est constitué pour la détection d'une première forme lumineuse (43) provoquée par le premier faisceau lumineux (38) lors de l'impact sur une surface d'objet (42),
et **en ce que** le dispositif de commande (23) est constitué pour le déclenchement d'au moins une mesure de sécurité lors de l'activation du premier faisceau lumineux (38) et d'une détection de la première forme lumineuse (43) par le dispositif de détection (37) optique au moins au nombre de un pendant le mouvement de déplacement du doigt de butée (17).

24. Machine d'usinage de pièces selon la revendication 23, **caractérisée en ce que** le dispositif d'éclairage (36) est disposé de façon déplaçable et couplée en mouvement avec le doigt de butée (17) au moins le long de deux axes de déplacement (22) entraînés.

25. Machine d'usinage de pièces selon la revendication 23 ou 24, **caractérisée en ce qu'**une surface miroir (40) optique, en particulier une surface miroir plate, est disposée pour l'orientation du premier faisceau lumineux (38) vers la zone devançant le doigt de butée (17).

26. Machine d'usinage de pièces selon l'une des revendications 23 à 25, **caractérisée en ce que** le dispositif d'éclairage (36) comprend un laser linéaire (52) qui est constitué pour l'émission, vers la zone devançant le doigt de butée (17), d'un premier faisceau lumineux (38) au moins très largement parallèle dont la trajectoire de faisceau (48) est située dans une première surface lumineuse (49) plane.

27. Machine d'usinage de pièces selon la revendication 26, **caractérisée en ce que** le laser linéaire (52) est disposé de telle sorte que, au cours du fonctionnement de la machine d'usinage de pièces (1), un axe transversal de faisceau lumineux (51) de la première surface lumineuse (49) transversal à la trajectoire de faisceau (48) est orienté d'une façon au moins très largement parallèle à une surface de pose (21) du doigt de butée (17).

28. Machine d'usinage de pièces selon la revendication 26 ou 27, **caractérisée en ce que** le laser linéaire (52) est disposé de telle sorte que, au cours du fonctionnement de la machine d'usinage de pièces (1), une étendue en largeur (53) de la première surface lumineuse (49) parallèle à l'axe transversal de faisceau lumineux (51) est plus grande dans la zone du doigt de butée (17) qu'une largeur (55) du doigt de butée (17) s'étendant entre deux bords latéraux (54).

29. Machine d'usinage de pièces selon l'une des revendications 26 à 28, **caractérisée en ce que** le laser linéaire (52) est constitué pour la projection, sur la surface (59) du doigt de butée (17), d'une deuxième bande lumineuse (60) parallèle à une surface de pose (21) du doigt de butée (17).

30. Machine d'usinage de pièces selon la revendication 29, **caractérisée en ce que** le laser linéaire (52) est constitué pour la projection, sur la surface (59) du doigt de butée (17), à distance de la deuxième bande lumineuse (60), d'une troisième bande lumineuse (61) parallèle à la deuxième bande lumineuse (60).

31. Machine d'usinage de pièces selon l'une des revendications 23 à 30, **caractérisée en ce que** le dispositif de détection (37) optique au moins au nombre de un comprend une caméra (46) stationnaire de capture d'images, en particulier une caméra CCD.

32. Machine d'usinage de pièces selon l'une des revendications 25 à 31, **caractérisée en ce que** la surface miroir (40) s'étend sur toute la longueur d'une poutre de table (6) constituée sur la machine d'usinage de pièces (1).

33. Machine d'usinage de pièces selon l'une des revendications 23 à 32, **caractérisée en ce que** le dispositif d'éclairage (36) est disposé, non couplé en mouvement avec le doigt de butée (17), le long d'un axe de déplacement (22) vertical orienté perpendiculairement à une surface de support (5).

34. Machine d'usinage de pièces selon l'une des revendications 23 à 33, **caractérisée en ce qu'**au moins un axe de déplacement (22) horizontal entraîné est prévu pour le déplacement commandé de façon automatisée du doigt de butée (17) au moins au nombre de un dans une position de butée (19) en direction d'un côté d'amenée de pièce (20).
